(19) Europäisches Patentamt
European Patent Office
Office européen des brevets

(11) **EP 3 201 661 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(21) Anmeldenummer: **15793675.8**

(22) Anmeldetag: **29.09.2015**

(51) Int Cl.:
**G02B 5/18** (2006.01)     **G02B 27/00** (2006.01)

(86) Internationale Anmeldenummer:
**PCT/AT2015/050241**

(87) Internationale Veröffentlichungsnummer:
**WO 2016/049672 (07.04.2016 Gazette 2016/14)**

(54) **VERFAHREN ZUR HERSTELLUNG EINES KONKAVEN/KONVEXEN GITTERS FÜR EINEN MONOCHROMATOR UND EIN SOLCHES GITTER**

METHOD FOR PRODUCING A CONCAVE/CONVEX GRATING FOR A MONOCHROMATOR AND SUCH A GRATING

PROCÉDÉ DE FABRICATION D'UN RÉSEAU CONCAVE/CONVEXE POUR UN MONOCHROMATEUR ET RÉSEAU CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2014 AT 506952014**

(43) Veröffentlichungstag der Anmeldung:
**09.08.2017 Patentblatt 2017/32**

(73) Patentinhaber: **Chromator GmbH**
**5020 Salzburg (AT)**

(72) Erfinder: **KRONOWETTER, Bernd**
**83483 Bischofswiesen (DE)**

(74) Vertreter: **KLIMENT & HENHAPEL**
**Patentanwälte OG**
**Gonzagagasse 15/2**
**1010 Wien (AT)**

(56) Entgegenhaltungen:
**EP-A1- 0 710 407**     **US-A- 4 027 975**
**US-A- 5 274 435**     **US-A- 5 638 212**
**US-A1- 2006 050 392**     **US-A1- 2007 252 989**

**Beschreibung**

GEBIET DER ERFINDUNG

Die vorliegende Erfindung betrifft Verfahren zur Herstellung eines konkaven oder konvexen Gitters für einen Monochromator.

STAND DER TECHNIK

Gittermonochromatoren finden als energiedispersive Elemente in vielen Bereichen Anwendung, insbesondere in Spektrographen. Grundlage für die Aufspaltung von polychromatischem Licht in Lichtstrahlen mit unterschiedlicher Wellenlänge ist die Gittergleichung

$$N * \lambda = d * (\sin \alpha + \sin \beta),$$

wobei N (die sogenannte Ordnung) eine ganze Zahl ist, $\lambda$ die Wellenlänge, d die Gitterkonstante, $\alpha$ der zur Gitternormalen gemessene Einfallswinkel und $\beta$ der zur Gitternormalen gemessene Ausfallswinkel. Dabei wird die Konvention verwendet, dass Winkel auf einer Seite der Gitternormalen positives Vorzeichen haben (entsprechend der mathematisch positiven Drehrichtung) und auf der anderen Seite der Gitternormalen negatives Vorzeichen. Entsprechend werden Lichtstrahlen unterschiedlicher Wellenlänge durch das Gitter unter unterschiedlichen Winkeln abgelenkt, wodurch die oben genannte spektrale Aufspaltung erfolgt.

Für eine bestimmte Wellenlängen $\lambda_B$ des Lichts, die auch als Blaze-Wellenlänge bezeichnet wird, kann eine Maximierung der Intensität erzielt werden, indem die Kontur des Gitters im Wesentlichen zackenförmig bzw. dreieckförmig gewählt wird. Dabei schließt eine Seite des Dreiecks (entspricht einer Facette des Gitters) mit der lokalen Gitterebene bzw. mit einer Tangente an das Gitter einen Blaze-Winkel $\theta_B$ ein, wobei als Faustformel die Blaze-Bedingung

$$N * \lambda_B = 2 * d * \sin \theta_B$$

verwendet wird. Eine simplifizierte Veranschaulichung des Blaze-Effekts besteht darin, dass die unter dem Blaze-Winkel angeordneten Facetten das Licht, das von einem Eintrittsspalt des Monochromators über das Gitter zu einem Austrittsspalt des Monochromators gelangt, wie Spiegel reflektieren, wenn die Blaze-Bedingung erfüllt ist. D.h. in diesem Fall teilt die Facettennormale den Winkel zwischen einfallendem und ausfallendem Strahl in zwei gleich große Teile.

Übliche Herstellungsverfahren von Gittern für Gittermonochromatoren basieren auf Interferenz zweier (kohärenter) Laserstrahlen. Dabei werden bei sogenannten "holographischen Gittern erster Generation" zwei Kugelwellen zur Interferenz gebracht. Die sich ergebenden Flächen maximaler Intensität werden durch Hyperboloide oder Ellipsoide gebildet. In der Praxis wird dies durch Laser mit vorgesetzten Pinholes realisiert, um Punktquellen für Kugelwellen zu simulieren. Im Allgemeinen ergeben sich somit Gitterlinien, die gekrümmt sind und ungleiche Abstände zueinander aufweisen.

Dieses Herstellungsverfahren wird insbesondere für gekrümmte und hier wiederum im Speziellen für konkave Gitter verwendet. Solche Gitter haben den großen Vorteil, dass keine weiteren optischen Elemente wie Linsen nötig sind, um beispielsweise eine Fokussierung der Lichtstrahlen zu gewährleisten. Entsprechend kompakt können Gittermonochromatoren mit solchen Gittern aufgebaut sein. Weiters können durch das Weglassen von optischen Elementen (Intensitäts-)Verluste an diesen vermieden werden. Zudem erweist sich dies insbesondere für die Anwendung mit Licht im UV-Bereich als günstig, da die Herstellung von Linsen für diesen Wellenlängenbereich (insbesondere für Wellenlängen unter 190 nm) schwierig ist.

Zwar ist das Prinzip der oben genannten Herstellung mittels Holographie für ein konkaves Gitter einfach, indem ein passend gekrümmtes Glas- oder Metall-Substrat, auf dem ein Photoresist angeordnet ist, mit dem Interferenzbild belichtet und nachfolgend geätzt wird. Allerdings ist die Herstellung von vielen gleichen Gittern relativ langwierig und kostenintensiv, da hierzu ein aufwendiger Replikationsprozess nötig ist, der in der Literatur gut dokumentiert ist, vgl. z.B. C. Palmer und E. Loewen, "Diffraction Grating Handbook", 6. Auflage, 2005.

Zudem kann mittels des holographischen Verfahrens kein Blaze-Gitter erzeugt werden, da das so erzeugte Gitter im Wesentlichen eine sinusförmige Kontur aufweist. Um ein Blaze-Gitter zu erzeugen, muss die zackenartige Struktur nachträglich z.B. durch Ionenbeschuss hergestellt werden.

Schließlich ist man in der Praxis auf eine überschaubare Anzahl von Laser-Wellenlängen beschränkt, was eine empfindliche Einschränkung bei der Auslegung der erzeugbaren Gitter nach sich zieht.

Aus der JP 2004053992 A sind Gitter für einen Wellenlängenmultiplexer / -demultiplexer bekannt, wobei zwei Ausführungsformen mit gekrümmtem Gitter offenbart sind, bei denen das Gitter jeweils auf einem optischen Block mit einer konkav gekrümmten, abschnittsweise zylindrischen Außenfläche angeordnet ist. Bei einer der beiden Ausführungsformen weist das Gitter Gitterlinien auf, die Kreisbögen von Kreisen mit gleichem Radius entsprechen, wobei die Kreiszentren entlang einer Geraden angeordnet sind, die auf der zylindrischen Außenfläche verläuft. Bei der anderen der beiden Ausführungsformen weist das Gitter Gitterlinien auf, die Kreisbögen von Kreisen mit unterschiedlichem Radius entsprechen, wobei die Kreiszentren nicht auf der Drehachse des Zylinders liegen, sondern auf einer Achse, die im Wesentlichen normal auf die Drehachse des Zylinders steht.

Aus der US 2006050392 A1 ist ein Gitter für einen Laserresonator bekannt, welches aus konzentrischen Kreisen oder einer Spirale besteht, die in eine konkave Außenfläche eines Körpers gedreht sind. Die Form des Gitters wird dabei mittels kommerziell erhältlicher Methoden basierend auf dem im Fourier-Raum arbeitenden Rigorous Coupled Wave Approach (RCWA) berechnet.

US 2007/252989 A1 offenbart ein Verfahren zur Herstellung eines Gitters.

AUFGABE DER ERFINDUNG

Es ist daher Aufgabe der vorliegenden Erfindung, ein Verfahren zur Herstellung von konkav oder konvex gekrümmten Gittern sowie ein solcherart hergestelltes Gitter zur Verfügung zu stellen, wobei die oben genannten Nachteile vermieden werden sollen. Insbesondere soll das Verfahren bzw. das Gitter keinen Einschränkungen in der Auslegung mittels bestimmter Wellenlängen unterliegen. Darüberhinaus soll auch die Herstellung eines Blaze-Gitters ermöglicht werden, ohne dass ein nachträglicher Herstellungsschritt wie beispielsweise Ionenbeschuss notwendig ist.

DARSTELLUNG DER ERFINDUNG

Kern der vorliegenden Erfindung ist die Idee, für eine beliebig vorgebbare Wellenlänge $\lambda_0$ rechnerisch Koordinaten von Gitterlinien auf einer konvex oder konkav gekrümmten Oberfläche eines Drehkörpers zu bestimmen, wobei die Gitterlinien konzentrische Kreise um eine Drehachse des Drehkörpers bilden, um die Anfertigung eines solchen Gitters durch Drehen mit Hilfe einer Ultrapräzisionsdrehmaschine zu ermöglichen. Dabei müssen die Gitterlinien auf dem tatsächlich erzeugten Gitter keine vollständig geschlossenen Kreise ausbilden, wenn die Drehachse außerhalb des tatsächlich hergestellten Gitters liegen sollte, was für das Drehen kein Problem darstellt. D.h. in diesem Fall liegt das tatsächlich hergestellt Gitter nur auf einem Teil der Oberfläche des Drehkörpers.

Ultrapräzisionsdrehmaschinen mit einer Genauigkeit im Submikrometerbereich sind aus dem Stand der Technik bekannt, wobei als Werkzeug bzw. Drehmeißelschneide üblicherweise Einkorndiamanten verwendet werden. Eine Gitterstruktur, die entweder den Gitterlinien oder Negativen der Gitterlinien entspricht, kann damit direkt in einen Basiskörper gedreht werden. D.h. der Basiskörper kann entweder der Basiskörper des zu erzeugenden Gitters sein, oder es kann sich dabei auch um den Basiskörper eines Gitternegativs, insbesondere einer Gussform handeln.

Grundsätzlich können beim Drehen der Gitterlinien bzw. der Negative der Gitterlinien diese schrittweise nacheinander erzeugt werden. Mittels der Ultrapräzisionsdrehmaschine können die Gitterlinien bzw. die Negative der Gitterlinien aber auch kontinuierlich in Form einer durchgehenden, um die Drehachse verlaufenden Spirale hergestellt werden, was drehtechnisch mitunter günstiger sein kann, ohne dass dies zu einem großen Fehler des Gitters bzw. zu einer großen Beeinträchtigung der Gitterqualität führen würde.

Die Koordinaten der Gitterlinien werden berechnet, indem eine Schar von Hilfsflächen mit der Oberfläche des Drehkörpers geschnitten wird. Die Hilfsflächen wiederum können grundsätzlich von einer Kugelwelle mit Wellenlänge $\lambda_0$ oder der Interferenz zweier Kugelwellen mit Wellenlänge $\lambda_0$ hergeleitet werden. Entscheidend ist jedoch, dass die Schar von Hilfsflächen sich stets durch eine Schar von um die Drehachse des Drehkörpers rotierenden Kurven zweiter Ordnung erzeugt werden können.

Daher ist es bei einem Verfahren zur Herstellung eines konkaven oder konvexen Gitters für einen Monochromator erfindungsgemäß vorgesehen, dass das Verfahren die Berechnung von Koordinaten von Gitterpunkten von Gitterlinien auf einem Drehkörper umfasst, indem Schnittpunkte einer Schar von Hilfsflächen mit einer Oberfläche des Drehkörpers bestimmt werden, wobei die Schar von Hilfsflächen durch eine Schar von Kurven zweiter Ordnung, die um eine Drehachse des Drehkörpers rotieren, erzeugt werden, das Verfahren weiters umfassend das Einspeisen der Koordinaten der Schnittpunkte bzw. Gitterpunkte in eine computergesteuerte Ultrapräzisionsdrehmaschine, um eine Gitterstruktur, die um die Drehachse zentrierten Kreisen oder einer um die Drehachse verlaufenden Spirale entspricht, in einen Basiskörper zu drehen, der zumindest abschnittsweise die Form des Drehkörpers aufweist.

Analog ist es bei einem Gitter für einen Monochromator umfassend einen Basiskörper, der zumindest abschnittsweise die Form eines Drehkörpers mit einer Drehachse und einer gekrümmten, vorzugsweise konkaven Außenfläche aufweist, erfindungsgemäß vorgesehen, dass direkt in der gekrümmten Außenfläche des Basiskörpers Gitterlinien angeordnet sind, die um die Drehachse zentrierten Kreisen oder einer um die Drehachse verlaufenden Spirale entsprechen.

Aus dem oben Gesagten ergibt sich, dass die Drehachse nicht zwangsläufig durch die gekrümmte Außenfläche verlaufen muss.

Jedenfalls aber liegt ein Gittermittelpunkt des Gitters auf der gekrümmten Außenfläche.

Die gekrümmte Außenfläche kann auch konvex sein.

Das erfindungsgemäß hergestellte Gitter und/oder das erfindungsgemäße Gitter eignen sich klarerweise nicht nur für Monochromatoren, sondern beispielsweise auch für Spektrographen. Insbesondere für Anwendungen in Spektrographen können konvexe Gitter interessant sein, da sich mit diesen mitunter günstige Geometrien des zerlegten Lichts erzielen lassen.

Es sei betont, dass mit dem erfindungsgemäßen Verfahren insbesondere sehr stark gekrümmte Gitter bzw. Gitternegative hergestellt werden können, besonders bevorzugt sehr stark gekrümmte Blaze-Gitter bzw. Blaze-Gitternegative. Analog sind stark gekrümmte erfindungsgemäße Gitter, insbesondere Blaze-Gitter möglich. Das bedeutet z.B. im Falle einer Kugel als Drehkörper, dass diese auch einen Radius von deutlich weniger als 100 mm haben kann, z.B. einen Radius von 5 mm bis 15 mm.

Neben der Krümmung des zugrundeliegenden Drehkörpers ist auch die Größe des tatsächlich hergestellten Gitters, d.h. die Größe der aktiven Fläche, auf der tatsächlich Gitterlinien vorhanden sind, entscheidend, insbesondere im Verhältnis zu einem Krümmungsradius des Drehkörpers. Das Verhältnis der aktiven Fläche zum Krümmungsradius des Drehkörpers kann dabei sehr groß sein. Beispielsweise kann bei einer Kugel mit einem Radius zwischen 5 mm und 500 mm, insbesondere zwischen 100 mm und 105 mm problemlos eine aktive Fläche von 25 mm * 25 mm bis 40 mm * 40 mm, z.B. 38 mm * 30 mm realisiert werden, wobei zur Berechnung der angegebenen aktiven Fläche deren Kantenlängen multipliziert worden sind. Es sind aber auch deutlich größere aktive Flächen möglich, insbesondere aktive Flächen, deren Kantenlänge deutlich größer als der halbe Kugelradius bzw. der halbe Krümmungsradius des Drehkörpers ist. Bzw. kann bei einer runden oder im Wesentlichen kreisförmigen aktiven Fläche deren Durchmesser auch deutlich größer sein als die Diagonale eines Quadrats, dessen Seitenlänge so groß wie der halbe Kugelradius bzw. der halbe Krümmungsradius des Drehkörpers ist. Dabei ist das angegebene obere Limit für den Kugelradius im Wesentlichen nur durch die Ultrapräzisionsdrehmaschine begrenzt, wobei derzeit jedenfalls Ultrapräzisionsdrehmaschinen verfügbar sind, die das Drehen von Gittern mit einem Kugelradius bis zu 500 mm problemlos zulassen.

Eine weitere Möglichkeit die Krümmung der erzeugten Gitter zu charakterisieren, besteht darin, das Verhältnis eines maximalen Radius' des zugrundeliegenden Drehkörpers zur maximalen Länge der Gitterlinien des erfindungsgemäß erzeugten bzw. erfindungsgemäßen Gitters anzugeben. Im Hinblick darauf, dass der Drehkörper keine Kugel zu sein braucht, sondern beispielsweise auch ein Torus sein kann, ist hierbei nicht vom Radius, sondern vom maximalen Radius die Rede. Somit ergibt sich beispielsweise für ein Gitter, welchem eine Kugel mit einem Radius von 105 mm als Drehkörper zugrundeliegt und welches eine maximale Länge der Gitterlinien von 40 mm aufweist, ein Verhältnis von rund 2,63:1. Entsprechend der Möglichkeit, erfindungsgemäß sehr stark gekrümmte Gitter herzustellen, ist es bei einer bevorzugten Ausführungsform des erfindungsgemäßen Gitters vorgesehen, dass das Verhältnis von einem maximalen Radius des Drehkörpers zu einer maximalen Länge der Gitterlinien kleiner als 9:1, vorzugsweise kleiner als 7:1, bevorzugt kleiner als 5:1, besonders bevorzugt kleiner als 3:1 ist. Es sei nochmals betont, dass es sich hierbei selbstverständlich um erfindungsgemäße Blaze-Gitter handeln kann.

Um die Schar von Hilfsflächen unter Verwendung einer Kugelwelle mit Wellenlänge $\lambda_0$ herzuleiten, ist es bei einer bevorzugten Ausführungsform des erfindungsgemäßen Verfahrens vorgesehen, dass zur Berechnung der Schar von Hilfsflächen eine erste Punktquelle einer Kugelwelle mit einer beliebig vorgebbaren Wellenlänge $\lambda_0$ angenommen wird, wobei die Hilfsflächen Flächen der Kugelwelle entsprechen, die konstante Phase haben und zueinander eine Phasenverschiebung aufweisen, die ein ganzzahliges Vielfaches von $2*\pi$ ist, und wobei die erste Punktquelle auf der Drehachse des Drehkörpers positioniert ist und diese Position der ersten Punktquelle der Position eines Eintrittsspalts oder eines Austrittsspalts des Monochromators entspricht.

Bei einer besonders bevorzugten Variante des erfindungsgemäßen Verfahrens wird ein Zentrum des jeweiligen Drehkörpers, bei dem es sich insbesondere um eine Kugel, einen Torus oder ein Ellipsoid handeln kann, im anderen Spalt (also der Austrittsspalt oder der Eintrittsspalt) angeordnet. D.h. je nachdem, um welchen Drehkörper es sich handelt, kann der andere Spalt insbesondere zusammenfallen mit: dem Zentrum der Kugel; dem Zentrum des Torus; einem Brennpunkt des Ellipsoids.

Um das bekannte Verfahren zur Herstellung sogenannter holographischer Gitter erster Generation - ohne Einschränkung auf durch verfügbare Laser vorgegebene Wellenlängen oder auf räumlichen Beschränkungen unterworfenen Geometrien - nachzuahmen, ist es bei einer bevorzugten Ausführungsform des erfindungsgemäßen Verfahrens vorgesehen, dass zur Berechnung der Schar von Hilfsflächen eine erste Punktquelle und eine zweite Punktquelle von Kugelwellen mit einer beliebig vorgebbaren Wellenlänge $\lambda_0$ angenommen werden, wobei die erste Punktquelle und die zweite Punktquelle auf einer Drehachse des Drehkörpers angeordnet sind und wobei die Hilfsflächen Flächen einer bestimmten, vorzugsweise maximalen Intensität der Interferenz der beiden Kugelwellen entsprechen. In der Regel ist die Wahl von Flächen maximaler Intensität der Interferenz die einfachste Methode, aber natürlich besteht keine prinzipielle Einschränkung, nicht auch einen anderen Wert, beispielsweise 90% der maximalen Intensität der Interferenz, zur Berechnung der Hilfsflächen heranzuziehen.

Es versteht sich, dass die Anordnung der Punktquellen so zu wählen ist, dass es nicht aus trivialen Gründen zu keinen Schnittpunkten mit der Oberfläche des Drehkörpers bzw. zu keinen Gitterpunkten kommt, beispielsweise wenn der Drehkörper eine Kugel ist und die beiden Punktquellen im Zentrum der Kugel angeordnet werden.

Im Falle der Berechnung der Schar von Hilfsflächen durch Betrachtung der Interferenz von Kugelwellen, die von Punktquellen ausgesandt werden, ergeben sich die Schnittpunkte insbesondere durch Schnitte der Oberfläche des Drehkörpers mit einer Schar rotierender Hyperbeln. Entsprechend ist es bei einer bevorzugten Ausführungsform des erfindungsgemäßen Verfahrens vorgesehen, dass zur Bestimmung der Schnittpunkte um die Drehachse rotierende Hyperbeln mit der Oberfläche des Drehkörpers geschnitten werden, wobei in den beiden Brennpunkten der jeweiligen Hyperbel die beiden Punktquellen angenommen sind und nur solche Hyperbeln betrachtet werden, für die gilt, dass bei der jeweiligen Hyperbel die absolute Differenz der Abstände von jedem auf der Hyperbel liegenden Punkt zu den Brennpunkten gleich $N * \lambda_0$ ist, wobei $N$ eine, für die jeweilige Hyperbel gewählte, ganze Zahl ist.

Die Drehsymmetrie um die Drehachse bringt die Möglichkeit einer starken Vereinfachung bei der Berechnung der Koordinaten der Gitterlinien. Konkret ist es bei einer bevorzugten Ausführungsform des erfindungsgemäßen Verfahrens vorgesehen, dass die Schnittpunkte lediglich in einer Konstruktionsebene, die von der Drehachse und einer Normalachse aufgespannt wird, bestimmt werden, wobei die Normalachse normal auf die Drehachse steht und durch einen, auf der Drehachse liegenden Ursprungspunkt, der ein Schnittpunkt der Oberfläche des Drehkörpers mit der Drehachse ist, verläuft. Die vollständige Gitterlinie folgt dann unmittelbar aus der Tatsache, dass diese ein Kreis ist, dessen Zentrum auf der Drehachse liegt. Der Ursprungspunkt liegt üblicherweise nicht auf dem tatsächlichen Gitter, da dieses, wie bereits ausgeführt, nicht der vollständigen Oberfläche des Drehkörpers zu entsprechen braucht, sondern auch nur einen Abschnitt auf der Oberfläche des Drehkörpers einnehmen kann. Nur wenn die Drehachse durch das tatsächliche Gitter verläuft, ergibt sich der Ursprungspunkt als Schnittpunkt der Drehachse mit dem Gitter und liegt daher auf diesem.

In aufwendigen Untersuchungen konnten relative Anordnungen der Punktquellen zum Ursprungspunkt auf der Drehachse ermittelt werden, die zu außergewöhnlich guten Gittern führen. Daher ist es bei einer bevorzugten Ausführungsform des erfindungsgemäßen Verfahrens vorgesehen, dass ein auf der Drehachse gemessener Abstand zwischen einem Ursprungspunkt, der ein Schnittpunkt der Oberfläche des Drehkörpers mit der Drehachse ist, und der ersten Punktquelle zu einem auf der Drehachse gemessenen Abstand zwischen dem Ursprungspunkt und der zweiten Punktquelle in einem Verhältnis von 1:0,34 bis 1:0,95 steht.

Um entsprechende Gitter mit gängigen Ultrapräzisionsdrehmaschine herstellen zu können, ist es bei einer besonders bevorzugten Ausführungsform des erfindungsgemäßen Verfahrens vorgesehen, dass der Abstand zwischen dem Ursprungspunkt und der ersten Punktquelle zwischen 95 mm und 145 mm beträgt und dass der Abstand zwischen dem Ursprungspunkt und der zweiten Punktquelle zwischen 50 mm und 90 mm beträgt.

Beispielsweise lassen sich somit Gitter herstellen mit einer Kugel als Drehkörper, deren Radius zwischen 100 mm und 110 mm, besonders bevorzugt 105 mm beträgt. Es sei jedoch nochmals betont, dass sich auch Gitter mit einer Kugel als Drehkörper herstellen lassen, deren Radius zwischen 5 mm und 500 mm beträgt.

Generell ist es bei einer bevorzugten Ausführungsform des erfindungsgemäßen Verfahrens vorgesehen, dass der Drehkörper eine Kugel, ein Ellipsoid oder ein Torus ist. Beispielsweise kann ein Torus statt einer Kugel gewählt werden, um die Performance des Gitters für eine bestimmte Wellenlänge zu optimieren.

Das erfindungsgemäße Verfahren zeichnet sich insbesondere dadurch aus, dass auf einfache Art und Weise Blaze-Gitter mitberücksichtigt werden können. Konkret ist es bei einer bevorzugten Ausführungsform des erfindungsgemäßen Verfahrens vorgesehen, dass in einer Konstruktionsebene, die durch die Drehachse und eine Normalachse aufgespannt wird, wobei die Normalachse normal auf die Drehachse steht und durch einen Ursprungspunkt verläuft, der ein Schnittpunkt der Oberfläche des Drehkörpers mit der Drehachse ist, eine Kontur des Gitters festgelegt wird, indem zwischen den Gitterpunkten abschnittsweise gerade Linien angeordnet werden, die an jeweils einen Gitterpunkt direkt anschließen und Facetten des Gitters definieren, wobei die geraden Linien jeweils mit einer in der Konstruktionsebene liegenden Tangente an das Gitter im betrachteten Gitterpunkt einen Winkel $\theta_B$ einschließen, der jeweils derart gewählt ist, dass die Blaze-Bedingung für mindestens eine vorgebbare Blaze-Wellenlänge $\lambda_B$ erfüllt ist.

Die Bestimmung von $\theta_B$ kann bei einer bevorzugten Ausführungsform des erfindungsgemäßen Verfahrens besonders einfach gestaltet werden, indem vorgesehen ist, dass zur Bestimmung des jeweiligen Winkels $\theta_B$ auch ein Eintrittsspalt sowie ein Austrittsspalt des Monochromators auf der Drehachse angeordnet werden; dass zu jedem Gitterpunkt das Gitter soweit um eine durch einen Gittermittelpunkt verlaufende Gitterdrehachse um einen Verdrehwinkel $\Delta$ gedreht wird, bis für Lichtstrahlen, die vom gedrehten Gitter zum Austrittsspalt abgelenkt werden, die vorgebbare Blaze-Wellenlänge $\lambda_B$ erzielt wird; dass eine Winkelhalbierende zwischen Lichtstrahlen, die vom Eintrittsspalt auf das Gitter fallen, und den vom Gitter zum Austrittsspalt abgelenkten Lichtstrahlen bestimmt wird, die normal auf die gerade Linie der Kontur steht, woraus unmittelbar $\theta_B$ folgt.

Die Kontur des Blaze-Gitters kann somit äußerst leicht mittels der Ultrapräzisionsdrehmaschine hergestellt werden, indem deren Einkorndiamant für jede Gitterlinie entsprechend ausgerichtet wird, um die jeweilige Kontur bzw. die jeweilige gerade Linie mit dem richtigen Winkel zu schneiden. Dabei muss berücksichtigt werden, dass das Gitter beim Drehen nicht um den Verdrehwinkel $\Delta$ verdreht montiert ist. Daher ist es bei einer bevorzugten Ausführungsform des erfindungsgemäßen Verfahrens vorgesehen, dass für jeden Gitterpunkt der jeweilige Winkel $\theta_B$ korrigiert um den Verdrehwinkel $\Delta$ in die Ultrapräzisionsdrehmaschine eingespeist wird, um Bearbeitungswinkel für ein Werkzeug der Ultrapräzisionsdrehmaschine zur Verfügung zu stellen, die ein Drehen der Gitterstruktur mit der Kontur ermöglichen.

Dabei ist es bei einer bevorzugten Ausführungsform des erfindungsgemäßen Verfahrens vorgesehen, dass die Gitterlinien bzw. deren Negative einzeln nacheinander oder als durchgehende Spirale gedreht werden. Für die Herstellung von Blaze-Gittern bedeutet dies, dass der Bearbeitungswinkel des Werkzeugs der Ultrapräzisionsdrehmaschine entweder zwischen jedem Drehschritt entsprechend justiert wird bzw. oder dass die Justierung kontinuierlich während des Drehens er Spirale erfolgt.

Um das Gitter für mehrere unterschiedliche Blaze-Wellenlängen gleichzeitig zu optimieren, ist es bei einer bevorzugten Ausführungsform des erfindungsgemäßen Verfahrens vorgesehen, dass zur Festlegung der Kontur des Gitters zwischen zwei Gitterpunkten jeweils mindestens eine weitere gerade Linie anschließend an die jeweilige gerade Linie angeordnet wird, wobei die mindestens eine weitere gerade Linie mit der Tangente einen Winkel $\theta_{B'}$ einschließt, der jeweils derart gewählt ist, dass die Blaze-Bedingung für eine vorgebbare Blaze-Wellenlänge $\lambda_{B'}$ erfüllt ist, wobei $\theta_{B'} \neq \theta_B$ und $\lambda_{B'} \neq \lambda_B$ gilt. D.h. eine Facette zwischen zwei aufeinander folgenden Gitterpunkten gewährleistet jeweils mehrere Blaze-Bedingungen. Es versteht sich, dass auch für die Bestimmung von $\theta_{B'}$ das oben beschriebene Verfahren mit Drehung des Gitters verwendet werden kann.

Alternativ ist es bei einer bevorzugten Ausführungsform des erfindungsgemäßen Verfahrens vorgesehen, dass für verschiedene Facetten die Blaze-Bedingung für unterschiedliche vorgebbare Blaze-Wellenlängen $\lambda_B$ erfüllt ist. D.h. jede Facette zwischen zwei aufeinander folgenden Gitterpunkten gewährleistet jeweils eine Blaze-Bedingung. Es zeigt sich, dass derartige Gitter etwas unempfindlicher gegen sogenannte Ghosts (unerwünschte Wellenlängen am Austrittsspalt des Monochromators bei bestimmten Nennwellenlängen) sind als im oben genannten Fall, wo eine Facette jeweils mehrere Blaze-Bedingungen gewährleistet. Beispielsweise lassen sich auf diese Art und Weise auch drei unterschiedliche Blaze-Bedingungen in einem Gitter realisieren.

Eine besonders einfache Ausführungsform ergibt sich bei zwei unterschiedlichen Blaze-Bedingungen, indem die Facetten abwechselnd die eine und die andere Blaze-Bedingungen erfüllen. Entsprechend ist es bei einer besonders bevorzugten Ausführungsform des erfindungsgemäßen Verfahrens vorgesehen, dass für aufeinander folgende Facetten die Blaze-Bedingung abwechselnd für zwei unterschiedliche vorgebbare Blaze-Wellenlängen $\lambda_B$, $\lambda_{B'}$ erfüllt ist.

Um qualitativ hochwertige Blaze-Gitter mit einer Kugel als korrespondierenden Drehkörper auf einfache Art und Weise zu erzeugen, ist es bei einer bevorzugten Ausführungsform des erfindungsgemäßen Verfahrens vorgesehen, dass der Drehkörper eine Kugel ist, deren Zentrum, welches auf der Drehachse angeordnet ist, mit dem Eintrittsspalt zusammenfällt.

Um qualitativ hochwertige Blaze-Gitter mit einem Torus als korrespondierenden Drehkörper auf einfache Art und Weise zu erzeugen, ist es bei einer bevorzugten Ausführungsform des erfindungsgemäßen Verfahrens vorgesehen, dass der Drehkörper ein Torus ist, dessen Zentrum, welches auf der Drehachse angeordnet ist, mit dem Eintrittsspalt zusammenfällt. Dabei fällt die Drehachse mit der Hauptachse des Torus zusammen. Jedoch braucht im vorliegenden Fall der Torus kein Loch zu haben, durch das die Hauptachse bzw. Drehachse verläuft. D.h. die übliche Definition des Torus, wonach um sein Zentrum ein Kreis mit Radius R verläuft und alle Punkte auf der Oberfläche des Torus von dieser Kreislinie einen festen Abstand r haben, wobei r < R gilt, ist nicht anzuwenden, da bei den erfindungsgemäßen Gittern nicht nur r $\geq$ R gelten kann, sondern auch vornehmlich gilt. Das bedeutet, dass im Sinne der Erfindung ein Torus insbesondere im Wesentlichen die Gestalt einer abgeflachten oder eingedrückten Kugel aufweisen kann.

Analog ist es bei einer bevorzugten Ausführungsform des erfindungsgemäßen Gitters vorgesehen, dass der Drehkörper eine Kugel oder ein Torus ist.

Ebenso ist es bei einer bevorzugten Ausführungsform des erfindungsgemäßen Gitters vorgesehen, dass es sich bei dem Gitter um ein Blaze-Gitter handelt, welches für mindestens eine Blaze-Wellenlänge $\lambda_B$ optimiert ist. D.h. das Gitter kann auch für mehrere Blaze-Wellenlängen bzw. Blaze-Bedingungen ausgelegt sein. Entsprechend ist es bei einer besonders bevorzugten Ausführungsform des erfindungsgemäßen Gitters vorgesehen, dass es sich bei dem Gitter um ein Blaze-Gitter handelt, welches für mindestens zwei unterschiedliche Blaze-Wellenlängen $\lambda_B$, $\lambda_{B'}$ optimiert ist.

Wie bereits erwähnt, können mit dem erfindungsgemäßen Verfahren Gitter, insbesondere Blaze-Gitter direkt durch Drehen mittels einer Ultrapräzisionsdrehmaschine hergestellt werden. Entsprechend ist es bei einer bevorzugten Ausführungsform des erfindungsgemäßen Verfahrens vorgesehen, dass mittels der Ultrapräzisionsdrehmaschine die Gitterlinien unter Verwendung der eingespeisten Koordinaten direkt in einen Basiskörper des Gitters, der zumindest abschnittsweise die Form des Drehkörpers aufweist, gedreht werden, um das Gitter zu erzeugen, wobei hierbei eine Außenfläche des Basiskörpers bearbeitet wird, die dieselbe Krümmung wie das herzustellende Gitter aufweist. Vorteilhaft ist es, den Basiskörper zumindest im Bereich der Außenfläche einstückig zu wählen, wobei als Material insbesondere auch Metalle wie Aluminium bzw. Aluminiumlegierungen in Frage kommen.

Analog ist es bei einer bevorzugten Ausführungsform des erfindungsgemäßen Gitters vorgesehen, dass der Basiskörper zumindest im Bereich der gekrümmten Außenfläche aus Quarz oder Metall, insbesondere aus Aluminium oder einer Aluminiumlegierung besteht. Es sei betont, dass das direkte Drehen selbstverständlich auch bei Basiskörpern möglich ist, die zumindest im Bereich ihrer gekrümmten Außenfläche aus Glas oder Kunststoff bestehen.

Alternativ kann jedoch auch ein Gitternegativ, insbesondere eine Gussform mit dem erfindungsgemäßen Verfahren hergestellt werden, die eine leichte und kostengünstige Reproduzierung ermöglicht. Entsprechend ist es bei einer bevorzugten Ausführungsform des erfindungsgemäßen Verfahrens vorgesehen, dass mittels der Ultrapräzisionsdrehmaschine Negative der Gitterlinien unter Verwendung der eingespeisten Koordinaten direkt in einen Basiskörper einer Gussform gedreht werden, wobei der Basiskörper der Gussform zumindest abschnittsweise die Form des Drehkörpers aufweist und wobei hierbei eine Außenfläche des Basiskörpers der Gussform bearbeitet wird, die eine entgegengesetzte Krümmung wie das herzustellende Gitter aufweist. Insbesondere eröffnet dies die Möglichkeit, Gussformen für Spritzgussverfahren herzustellen. D.h. es können mit dem erfindungsgemäßen Verfahren Gitter praktisch ohne Einschränkungen für beliebige Wellenlängen und auch als Blaze-Gitter ausgelegt werden und mittels Spritzgussverfahren massenweise extrem kostengünstig produziert werden.

Als Materialien für Spritzgussverfahren kommen insbesondere Kunststoff, aber auch Glas in Frage. Analog ist es bei einer bevorzugten Ausführungsform des erfindungsgemäßen Gitters vorgesehen, dass der Basiskörper zumindest im Bereich der gekrümmten Außenfläche aus Kunststoff oder Glas besteht. Ebenso ist es bei einer bevorzugten Ausführungsform des erfindungsgemäßen Gitters vorgesehen, dass der Basiskörper zumindest im Bereich der gekrümmten Außenfläche mit den Gitterlinien im Spritzgussverfahren hergestellt ist.

Bei einer besonders bevorzugten Ausführungsform des erfindungsgemäßen Gitters ist der Basiskörper einstückig ausgeführt.

Insbesondere ist es bei einer bevorzugten Ausführungsform des erfindungsgemäßen Gitters vorgesehen, dass das Gitter mit einem erfindungsgemäßen Verfahren hergestellt ist.

Selbstverständlich lassen sich mit dem erfindungsgemäßen Verfahren nicht nur Gitter herstellen, die in Reflexionsgeometrie verwendet werden können, sondern auch Transmissionsgitter. Letztere können gleichzeitig auch als Prisma fungieren. Weiters kann ein Transmissionsgitter bzw. dessen Basiskörper auch direkt mit einem weiteren optischen Element, insbesondere mit einer Linse oder allgemein mit einem transparenten Körper verbunden werden, sodass das optische Element bzw. das Gitter gegen äußere Einflüsse wie z.B. Staub geschützt ist.

Hierzu muss das Material des Gitters bzw. des Basiskörpers entsprechend transparent für den Wellenlängenbereich gewählt werden, für den das Gitter verwendet werden soll. Für sichtbares Licht kommen daher insbesondere transparenter Kunststoff und Glas als solche Materialien in Frage. Entsprechend ist es bei einer bevorzugten Ausführungsform des erfindungsgemäßen Gitters vorgesehen, dass das Gitter ein Transmissionsgitter ist.

Insbesondere wenn die Anordnung des optischen Elements, das mit dem Gitter bzw. Basiskörper direkt verbunden ist, so gewählt wird, dass die einfallenden Strahlen zunächst durch das optische Element und/oder durch den mit dem optischen Element verbundenen Basiskörper treten müssen, bevor sie schließlich an den Gitterlinien reflektiert werden, kann es hilfreich sein, das Gitter mit einer reflektierenden Schicht zu versehen. Diese kann z.B. aus einer Metallschicht bestehen, die auf der Seite der Gitterlinien des Gitters aufgedampft ist.

Weiters sei bemerkt, dass der Basiskörper natürlich auch selbst das optische Element ausbilden kann. Insbesondere bei Anwendungen in Spektrographen kann dies von Vorteil sein. Dabei kann das Gitter als Transmissionsgitter z.B. so ausgelegt sein, dass das Licht erst nach Durchtritt durch das Gitter in den transparenten Basiskörper gelangt. In diesem Fall kann weiters eine reflektierende Schicht am oder im Basiskörper vorgesehen sein, um das Licht wieder aus dem Basiskörper heraus zu reflektieren.

Bei einer weiteren möglichen Auslegung des Gitters, die sich ebenfalls insbesondere für die Verwendung in Spektrographen eignet, ist das Gitter grundsätzlich ein Reflexionsgitter, wobei das Licht jedoch zuerst durch den Basiskörper treten muss, bevor es auf das Gitter fällt. Zu diesem Zweck kann ebenfalls eine reflektierende Schickt am oder im Basiskörper vorgesehen sein, um das Licht einerseits gezielt auf das Gitter lenken zu können und andererseits um das vom Gitter kommende Licht wieder gezielt aus dem Basiskörper heraus zu reflektieren. Entsprechend ist es bei einer bevorzugten Ausführungsform des erfindungsgemäßen Gitters vorgesehen, dass eine reflektierende Schicht, vorzugsweise aus Metall, am oder im Basiskörper vorgesehen ist.

Es sei weiters betont, dass ein separates optisches Element mit dem Gitter, insbesondere auf der Seite der Gitterlinien des Gitters verbunden sein kann. Entsprechend ist es bei einer bevorzugten Ausführungsform des erfindungsgemäßen Gitters vorgesehen, dass ein optisches Element direkt mit der gekrümmten Außenfläche des Basiskörpers verbunden ist.

Insbesondere die Herstellung im Spritzgussverfahren erlaubt es, durch Kombination von zwei Gussformen für Gitter, ein Kombinationsgitter zu erzeugen, das auf zwei einander gegenüberliegenden Seiten zwei erfindungsgemäße Gitter enthält.

Entsprechend ist erfindungsgemäß ein Kombinationsgitter vorgesehen, umfassend ein erfindungsgemäßes Gitter und ein weiteres erfindungsgemäßes Gitter, wobei das Gitter und das weitere Gitter denselben Basiskörper aufweisen, wobei der Basiskörper abschnittsweise die Form eines Drehkörpers mit einer gekrümmten, vorzugsweise konkaven Außenfläche des weiteren Gitters aufweist und wobei die gekrümmten Außenflächen auf einander gegenüberliegenden Seiten des Basiskörpers angeordnet sind.

Hierbei können die beiden Gitter für unterschiedliche Wellenlängenbereiche optimiert sein, also beispielsweise ein Gitter für einen kurzwelligen Wellenlängenbereich (z.B. im blauen Bereich des sichtbaren Spektrums) und ein Gitter für einen langwelligen Wellenlängenbereich (z.B. im roten Bereich des sichtbaren Spektrums). Wird ein solches Kombinationsgitter z.B. in einem Monochromator oder Spektrograph bzw. Spektrometer eingesetzt, kann durch einfaches Umdrehen (d.h. im Wesentlichen um 180°) des Kombinationsgitters das jeweilige Gerät für die unterschiedlichen Wellenlängenbereiche optimiert werden, was sich insbesondere in einer besonders hohen Lichtausbeute und Genauigkeit der Wellenlängenseparation in den jeweiligen Wellenlängenbereichen niederschlägt.

Daher ist es bei einer bevorzugten Ausführungsform des erfindungsgemäßen Kombinationsgitters vorgesehen, dass das Gitter einen Gittermittelpunkt aufweist, dass das weitere Gitter einen Gittermittelpunkt aufweist und dass das Gitter im Bereich seines Gittermittelpunkts eine Gitterkonstante aufweist, die sich von einer Gitterkonstante unterscheidet, die das weitere Gitter im Bereich seines Gittermittelpunkts aufweist.

Wenn zwei konkave Gitter auf die beschriebene Weise kombiniert werden, kann insbesondere durch Einsatz des Spritzgussverfahrens ein Kombinationsgitter erzeugt werden, das sehr kompakt gebaut ist. Konkret kann eine minimale Wandstärke des Kombinationsgitters im Bereich der Gittermitten der beiden kombinierten Gitter von 0,5 mm bis 14 mm, vorzugsweise bis 3,5 mm realisiert werden, wobei die untere Grenze in erster Linie herstellungstechnisch bedingt ist. Somit könnten z.B. kugelförmige Drehkörper mit einem Radius von 103,5 mm für jedes der beiden kombinierten vorgesehen sein, oder aber auch kugelförmige Drehkörper mit unterschiedlichen Radien wie z.B. 105 mm einerseits und 102 mm andererseits bei einer minimalen Wandstärke von 3 mm.

Darüberhinaus können bei der Herstellung mittels Spritzgussverfahren generell, d.h. sowohl für erfindungsgemäße Gitter als auch erfindungsgemäße Kombinationsgitter, Befestigungsstrukturen miterzeugt werden, die für die Montage des jeweiligen Gitters bzw. Kombinationsgitters z.B. in einem Monochromator oder Spektrographen vorgesehen sind.

Es sei jedoch betont, dass das Kombinationsgitter nicht zwangsweise im Spritzgussverfahren hergestellt werden muss. Selbstverständlich ist auch das direkte Drehen möglich, wobei der Basiskörper vorzugsweise aus Metall, insbesondere aus Aluminium bzw. einer Aluminiumlegierung besteht.

Schließlich versteht es sich, dass es sich bei jeweils einem oder bei beiden der im Kombinationsgitter kombinierten Gittern um erfindungsgemäße Blaze-Gitter handeln kann, wobei die Blaze-Bedingung für dieselbe oder für unterschiedliche Blaze-Wellenlängen erfüllt sein kann. Entsprechend ist es bei einer bevorzugten Ausführungsform des erfindungsgemäßen Kombinationsgitters vorgesehen, dass das Gitter und das weitere Gitter Blaze-Gitter sind, die für unterschiedliche Blaze-Wellenlängen $\lambda_B$, $\lambda_{B'}$ optimiert sind. Dies gestattet wiederum die Optimierung der Lichtausbeute bei unterschiedlichen Blaze-Wellenlängen, und macht ein derartiges Kombinationsgitter insbesondere für den Einsatz in einem Monochromator oder Spektrograph interessant, die einen großen Wellenlängenbereich abdecken sollen.

Aus dem Gesagten folgt auch, dass die erfindungsgemäßen Gitter Gitterkonstanten aufweisen können, die über die gesamte aktive Fläche des Gitters variieren können. D.h. der Abstand der Gitterlinien zueinander ist nicht notwendigerweise über das gesamte Gitter bzw. über dessen gesamte aktive Fläche konstant. Vielmehr kann mittels des erfindungsgemäßen Verfahrens der Abstand der Gitterlinien bzw. die Gitterkonstante gezielt variiert werden, um Aberrationskorrekturen zu erzeugen. Entsprechend ist es bei einer bevorzugten Ausführungsform des erfindungsgemäßen Gitters vorgesehen, dass ein Abstand der Gitterlinien zueinander in unterschiedlichen Bereichen des Gitters unterschiedlich groß ist, um ein aberrationskorrigiertes Gitter zu gewährleisten.

Außerdem ist erfindungsgemäß ein Monochromator vorgesehen, umfassend ein erfindungsgemäßes Gitter oder ein erfindungsgemäßes Kombinationsgitter. Insbesondere um Streulicht zu minimieren, ist es bei einer bevorzugten Ausführungsform des erfindungsgemäßen Monochromators vorgesehen, dass es sich um einen Doppel-Monochromator oder um einen Dreifach-Monochromator handelt.

Ebenso ist erfindungsgemäß ein Spektrograph bzw. Spektrometer vorgesehen, umfassend ein erfindungsgemäßes Gitter oder ein erfindungsgemäßes Kombinationsgitter.

## KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:

Fig. 1 eine schematische perspektivische Darstellung eines erfindungsgemäßen Gitters in einem Monochromator

Fig. 2 eine schematische Darstellung eines erfindungsgemäßen Gitters in einem Monochromator mit konstanter Ablenkung in einer Schnittansicht

Fig. 3 ein schematisches Diagramm zur erfindungsgemäßen Konstruktion eines Gitters in einer Konstruktionsebene unter der Annahme zweier Punktquellen

Fig. 4     ein Diagramm analog zu Fig. 3, jedoch mit Abmessungen für ein konkretes Ausführungsbeispiel

Fig. 5     eine schematische Darstellung eines Gitters, das erfindungsgemäß konstruiert ist, in direkter Aufsicht auf das Gitter

Fig. 6     eine Prinzipskizze zur Illustration eines Blaze-Gitters mit einer Kontur, die eine Blaze-Bedingung erfüllt

Fig. 7     ein Diagramm analog zu Fig. 4, wobei ein Blaze-Gitter erzeugt wird

Fig. 8     eine Detailansicht eines Ausschnitts einer Kontur eines Blaze-Gitters in einer Darstellung analog zu Fig. 7

Fig. 9     eine schematische Darstellung eines erfindungsgemäßen Kombinationsgitters in einer Schnittansicht

Fig. 10     eine schematische Darstellung eines erfindungsgemäßen Spektrographen mit einem erfindungsgemäßen Gitter in Reflexionsgeometrie

Fig. 11     eine schematische Darstellung eines erfindungsgemäßen Spektrographen mit einem erfindungsgemäßen Gitter in Transmissionsgeometrie

WEGE ZUR AUSFÜHRUNG DER ERFINDUNG

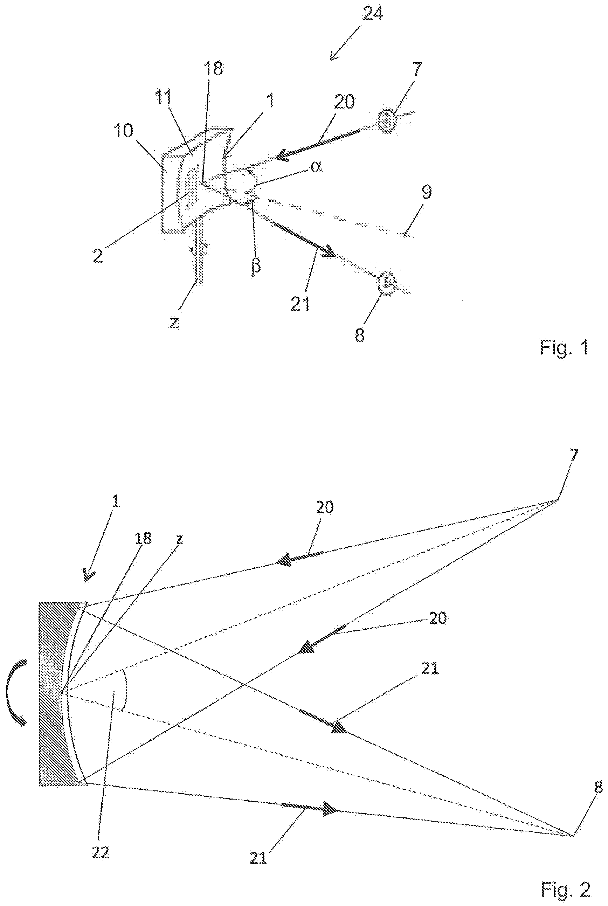

Fig. 1 illustriert ein erfindungsgemäßes konkav gewölbtes bzw. gekrümmtes Gitter 1, welches in einem Monochromator 24 verwendet wird. Das Gitter 1 umfasst einen Basiskörper 10 mit einer konkav gewölbten Außenfläche 11, in welcher Gitterlinien 2 angeordnet sind.

Auf das Gitter 1 trifft ein einfallender Lichtstrahl 20, der von einem Eintrittsspalt 7 des Monochromators 24 unter einem Einfallswinkel $\alpha$ auf das Gitter 1 trifft. Dabei ist der Einfallswinkel $\alpha$ zwischen einer Gitternormalen 9 und dem einfallenden Lichtstrahl 20 gemessen. Die Gitternormale 9 geht durch einen Gittermittelpunkt 18 und steht normal auf eine Tangentialebene, wobei die Tangentialebene (nicht dargestellt) das Gitter 1 im Gittermittelpunkt 18 berührt.

Durch das Gitter 1 wird der Lichtstrahl 20 so in seine spektralen Komponenten zerlegt, dass ein ausgehender Lichtstrahl 21 mit einer gewissen Wellenlänge $\lambda$ unter einem Ausfallswinkel $\beta$ zu einem Austrittsspalt 8 des Monochromators abgelenkt wird. Sofern der einfallende Lichtstrahl 20 benachbarte Wellenlängen aufweist, erzeugen diese benachbarten Wellenlängen neben dem Austrittsspalt 8 Abbildungen des Eintrittsspalts 7, was zur Verwendung in einem Spektrograph bzw. Spektrometer ausgenutzt werden kann.

Durch Drehung des Gitters 1 um eine Gitterdrehachse z, die in der Tangentialebene liegt und normal auf eine durch die Lichtstrahlen 20, 21 aufgespannte Ebene steht, können unterschiedliche Wellenlängen $\lambda$ selektiert werden, ohne dass die Anordnung von Eintrittsspalt 7 und Austrittsspalt 8 geändert wird.

D.h. ein Ablenkungswinkel 22 zwischen den Lichtstrahlen 20, 21 bleibt stets gleich, was in der schematischen Schnittdarstellung der Fig. 2 besser erkennbar ist.

Im gezeigten Ausführungsbeispiel der Fig. 1 ist der Basiskörper 10 einstückig ausgeführt. Die Gitterlinien 2 sind erfindungsgemäß mittels einer Ultrapräzisionsdrehmaschine in die konkave Außenfläche 11 des Basiskörpers 10 gedreht. Dabei bildet die konkave Außenfläche 11 einen Teil einer Oberfläche eines Drehkörpers 3, bei dem es sich im gezeigten Ausführungsbeispiel um eine Kugel handelt.

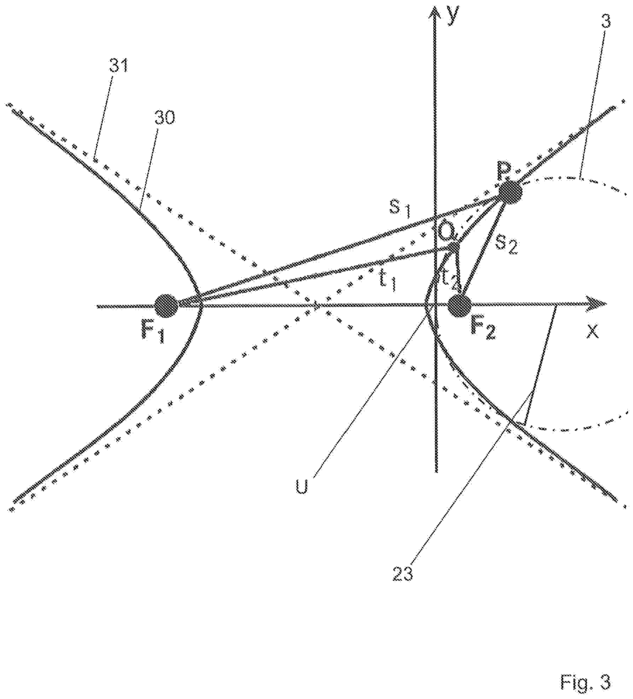

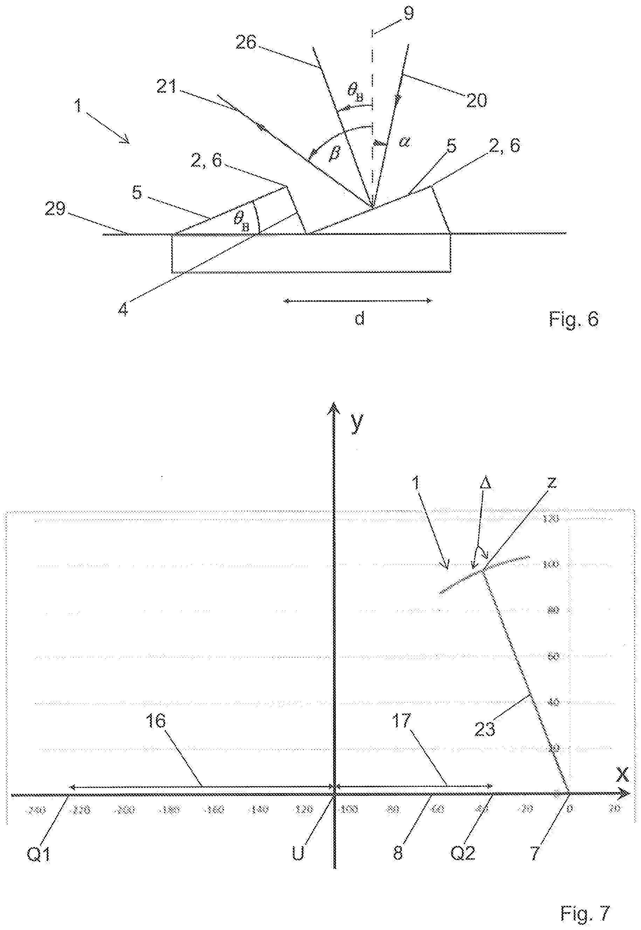

Zur erfindungsgemäßen Berechnung der Koordinaten von Gitterpunkten 6 (vgl. Fig. 6) der Gitterlinien 2, die in die Ultrapräzisionsdrehmaschine, welche computergesteuert ist, eingespeist werden, um die Gitterlinien 2 in den Basiskörper 10 zu drehen, wird im gezeigten Ausführungsbeispiel das Interferenzmuster von Kugelwellen mit einer vorgegebenen Wellenlänge $\lambda_0$, die von zwei Punktquellen Q1, Q2 ausgehen, angenommen. Dabei werden die beiden Punktquellen Q1, Q2 auf einer Drehachse der Kugel 3 angeordnet. Flächen maximaler Intensität im Interferenzbild werden durch Hyperbeln 30 (vgl. Fig. 3) gebildet, die um eine Drehachse x rotieren, wobei in den Hyperbel-Brennpunkten F1, F2 die Punktquellen Q1, Q2 sitzen. Um nun die Koordinaten der Gitterpunkte 6 zu erhalten, wird prinzipiell eine Schar solcher Hyperbeln 30 mit der Oberfläche der Kugel 3 geschnitten. Dabei werden nur solche Hyperbeln 30 betrachtet, für die gilt, dass bei der jeweiligen Hyperbel 30 die absolute Differenz der Abstände S1, S2 von jedem auf der Hyperbel 30 liegenden Punkt P zu den Brennpunkten F1, F2 gleich N * $\lambda_0$ ist, wobei N eine, für die jeweilige Hyperbel 30 gewählte, ganze Zahl ist.

Dies ist in Fig. 3 anhand einer Hyperbel 30 (die Asymptoten 31 sind als strichlierte Linien dargestellt) in einer Konstruktionsebene illustriert, wobei die Konstruktionsebene durch die Drehachse x und eine Normalachse y aufgespannt wird. Die Normalachse y steht dabei normal auf die Drehachse und geht durch einen Ursprungspunkt U, der wiederum ein Schnittpunkt der Oberfläche der Kugel 3 mit der Drehachse x ist. In der Konstruktionsebene ergibt sich der strichpunktiert dargestellte Kreis als Schnitt der Kugel 3 mit Kugelradius 23.

In Fig. 3 ergibt sich für die gezeigte Hyperbel 30 ein weiterer Schnittpunkt bei Punkt Q, wobei natürlich auch die absolute Differenz der Abstände t1, t2 gleich N * $\lambda_0$ ist.

Aufgrund der Drehsymmetrie der Gitterlinien 2 um die Drehachse x sind die Gitterlinien 2 bereits durch die Bestimmung der Koordinaten der Gitterpunkte 6 in der Konstruktionsebene vollständig bestimmt.

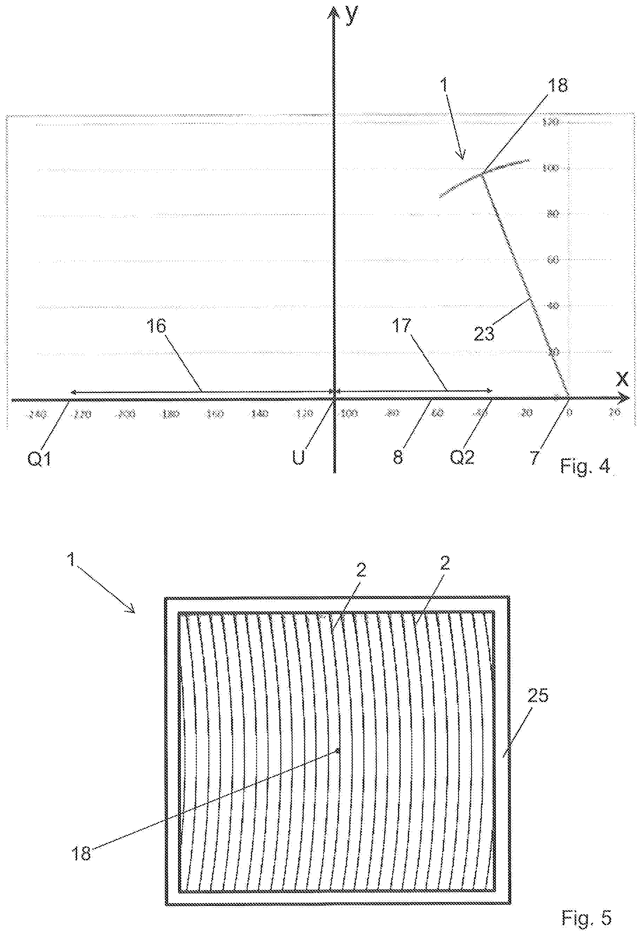

Fig. 4 ist eine weitere Illustration einer solchen Berechnung von Gitterpunkten 6 in der Konstruktionsebene, wobei das Gitter 1 wiederum auf einem Teil einer Oberfläche einer Kugel 3 angenommen wird. In Fig. 4 sind jedoch im Gegensatz zu Fig. 3 konkrete Größenangaben in Millimetern für ein Ausführungsbeispiel zu finden, wobei als Wellenlänge $\lambda_0$ = 520 nm gewählt ist - ein Wert, der sich bei aus dem Stand der Technik bekannten holographischen Herstellungsverfahren mit gängigen Laserquellen üblicherweise nicht realisieren lässt. Es sei bemerkt, dass beispielsweise auch $\lambda_0$ = 660 nm gewählt werden könnte - ebenfalls ein Wert, der sich bei aus dem Stand der Technik bekannten holographischen Herstellungsverfahren mit gängigen Laserquellen üblicherweise nicht realisieren lässt. Der Kugelradius 23 beträgt 105 mm, wobei der Kugelmittelpunkt auf der Drehachse x liegt und sich die Millimeterangaben auf den Achsen in Fig. 4 auf diesen Punkt beziehen. Entsprechend liegt der Ursprungspunkt U auf der Drehachse x bei 105 mm.

Die Anordnung der Punktquellen Q1, Q2 auf der Drehachse x relativ zueinander und zum Ursprungspunkt U kann optimiert werden, um für eine optimale Gitterqualität bei einer gewünschten Wellenlänge zu sorgen. Im gezeigten Ausführungsbeispiel der Fig. 4 liegt die erste Punktquelle Q1 auf der Drehachse x bei 225 mm und die zweite Punktquelle Q2 bei 35 mm. Somit ergibt sich als Abstand 16 zwischen der ersten Punktquelle Q1 und dem Ursprungspunkt 120 mm und als Abstand 17 zwischen der zweiten Punktquelle Q2 und dem Ursprungspunkt U 80 mm.

Das sich ergebende Gitter 1 ist in Fig. 5 in frontaler Aufsicht dargestellt, wobei aus Gründen der Klarheit nur ca. jede 2000. Gitterlinie 2 eingezeichnet ist. Dabei ist das Gitter 1 von einem Rahmen 25 umgeben, der Streulicht vom Rand des Gitters 1 verhindern soll und üblicherweise schwarz ausgeführt wird.

Um die Intensitätsausbeute für eine ausgewählte Blaze-Wellenlänge $\lambda_B$ zu erhöhen, kann das erfindungsgemäße Gitter 1 ein Blaze-Gitter sein bzw. können mit dem erfindungsgemäßen Verfahren auf einfache Art und Weise Blaze-Gitter hergestellt werden. Fig. 6 illustriert anhand einer Schnittansicht das Prinzip eines Blaze-Gitters, welches eine zackenartige Kontur 4 aufweist. Zwischen den Gitterlinien 2 sind ebene Facetten 5. Entsprechend der Schnittdarstellung der Fig. 6 ergeben sich die Facetten 5 als gerade Linien zwischen den Gitterpunkten 6 in der Zeichenebene der Fig. 6. Wenn die Blaze-Bedingung für die Blaze-Wellenlänge $\lambda_B$ erfüllt ist, wirkt die Facette 5 wie ein Spiegel und eine Facettennormale 26 halbiert dann entsprechend den Winkel zwischen dem einfallenden Lichtstrahl 20 und dem ausfallenden Lichtstrahl 21. Der Winkel, den die Facettennormale 26 hierbei mit der Gitternormalen 9 einschließt ist der Blaze-Winkel $\theta_B$. Ebenso ergibt sich der Blaze-Winkel $\theta_B$ zwischen der Facette 5 und der Tangentialebene an das Gitter 1 im betrachteten Gitterpunkt 6 bzw. in der dargestellten Schnittansicht zwischen der geraden Linie und einer Tangente 29. Eine Gitterkonstante d im in Fig. 6 dargestellten Bereich ergibt sich aus dem Abstand der Gitterlinien 2 bzw. Gitterpunkte 6 zueinander, gemessen entlang der Tangente 29.

Hierzu sei bemerkt, dass die Gitterkonstante d bzw. der Abstand der Gitterlinien 2 zueinander nicht über das gesamte Gitter 1 bzw. dessen gesamte aktive Fläche konstant zu sein braucht. Vielmehr erlaubt es das erfindungsgemäße Verfahren, den Abstand der Gitterlinien 2 bzw. die Gitterkonstante d gezielt zu variieren, um aberrationskorrigierte Gitter 1 herzustellen.

Wie oben bereits ausgeführt, ist man bei der Auslegung des Gitters 1 nicht auf bestimmte Wellenlängen beschränkt. Insbesondere lassen sich somit durch Wahl eines ganzzahligen Vielfachen einer bestimmten Grundwellenlänge optimiert Gitter 1 erzeugen, die für höhere Ordnungen dieser Grundwellenlänge gezielt eingesetzt werden können. D.h. es können entsprechend große Wellenlängen $\lambda_0$ vorgegeben werden. Daher ist es bei einer bevorzugten Ausführungsform des erfindungsgemäßen Gitters 1 bzw. bei dessen Erzeugung mittels des erfindungsgemäßen Verfahrens vorgesehen, dass als Wellenlänge $\lambda_0$ > 1500 nm, vorzugsweise $\lambda_0$ > 1000 nm, besonders bevorzugt $\lambda_0$ > 500 nm gewählt wird. Wenn es sich in diesem Fall um ein Blaze-Gitter handelt, so wird auch die Blaze-Bedingung für mehrere Wellenlängen - entsprechend den unterschiedlichen Ordnungen der Grundwellenlänge - erfüllt.

Erfindungsgemäß kann ein Blaze-Gitter erzeugt werden, indem beim Drehen mit der Ultrapräzisionsdrehmaschine deren Werkzeug für jede Gitterlinie um einen passenden Bearbeitungswinkel gedreht wird, damit Facetten 5 mit dem jeweils richtigen Blaze-Winkel $\theta_B$ erzeugt werden. D.h. es muss für jede Gitterlinie 2 neben der Koordinate des zugehörigen Gitterpunkts 6 in der Konstruktionsebene auch der zugehörige Blaze-Winkel $\theta_B$ für eine vorgegebene Blaze-Wellenlänge $\lambda_B$ berechnet werden. Entsprechend werden in die Ultrapräzisionsdrehmaschine nicht nur die Koordinaten von Gitterpunkten eingespeist, sondern auch die zugehörigen Blaze-Winkel $\theta_B$.

Die Berechnung der Blaze-Winkel $\theta_B$ wird anhand Fig. 7 illustriert, die grundsätzlich Fig. 4 entspricht. Zusätzlich werden nun jedoch auch der Eintrittsspalt 7 und der Austrittsspalt 8 des Monochromators 24 auf die Drehachse gelegt. Nachdem die Gitterpunkte 6 des Gitters 1 wie im Zusammenhang mit Fig. 3 und Fig. 4 beschrieben berechnet worden sind, wird das Gitter 1 für jeden Gitterpunkt 6 um die Gitterdrehachse z um einen Verdrehwinkel $\Delta$ soweit verdreht, bis für den ausfallenden Lichtstrahl 21 die vorgegebene Blaze-Wellenlänge $\lambda_B$ erzielt wird. Die Winkelhalbierende zwischen den Lichtstrahlen 20, 21 steht dann normal auf die Facette 5 bzw. auf die der Facette 5 entsprechende gerade Linie in der Konstruktionsebene, sodass der Blaze-Winkel $\theta_B$ unmittelbar hieraus folgt.

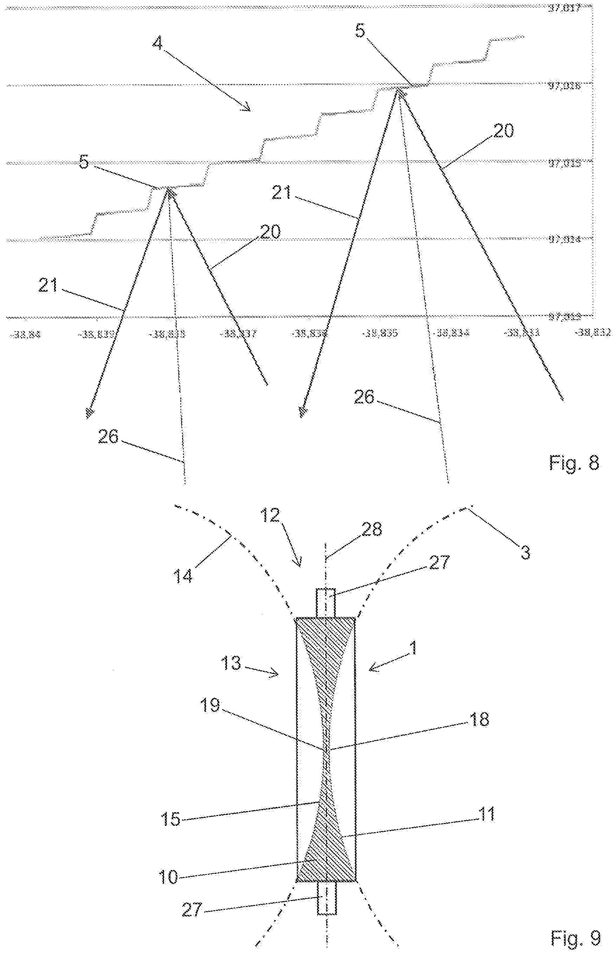

Fig. 8 zeigt eine Detailansicht eines Ausschnitts der Kontur 4 eines so erzeugten Blaze-Gitters 1, wobei zum besseren Verständnis bei einzelnen Facetten 5 die Lichtstrahlen 20, 21 sowie die Facettennormale 26 eingezeichnet sind. Man beachte, dass auch in Fig. 8 die Größenangaben in mm gemacht sind. D.h. die Kontur 4 weist Stufen im Submikrometerbereich auf. Solche Strukturen sind mit heute verfügbaren Ultrapräzisionsdrehmaschinen erzeugbar.

Dabei können auch Gitter-Negative gedreht werden, insbesondere als Gussformen für Spritzgussverfahren, um in weiterer Folge Gitter 1 in großen Mengen extrem kostengünstig herzustellen.

Insbesondere die Verwendung von Gussformen bietet auch die Möglichkeit, eine Gussform eines Gitters 1, welches für einen gewissen Wellenlängenbereich (z.B. den blauen Bereich im sichtbaren Lichtspektrum) optimiert ist, mit einer Gussform eines weiteren Gitters 13, welches für einen anderen Wellenlängenbereich (z.B. den roten Bereich im sichtbaren Lichtspektrum) optimiert ist, miteinander zu kombinieren, um ein Kombinationsgitter 12 zu erzeugen. Ein solches Kombinationsgitter 12 ist in Fig. 9 in einer Schnittdarstellung illustriert.

Das Kombinationsgitter 12 umfasst das konkave Gitter 1 und das konkave weitere Gitter 13, wobei beide Gitter 1, 13 erfindungsgemäße Gitter sind. D.h. die Gitter 1, 13 können auch Blaze-Gitter sein, die insbesondere für unterschiedliche Blaze-Wellenlängen ausgelegt sein $\lambda_B$ können. Beide Gitter 1, 13 weisen denselben Basiskörper 10 auf, der nicht nur die konkave Außenfläche 11, sondern dieser gegenüberliegend auch eine weitere konkave Außenfläche 15 des weiteren Gitters 13 aufweist. In der weiteren konkaven Außenfläche 15 sind die Gitterlinien des weiteren Gitters 13 angeordnet.

Die weitere konkave Außenfläche 15 entspricht einem Teil eines weiteren Drehkörpers 14 (in Fig. 9 durch eine strichlierte Linie angedeutet, ebenso wie der dem Gitter zugeordnete Drehkörper 3), der dem weiteren Gitter 13 zugeordnet ist und bei der erfindungsgemäßen Herstellung zur Berechnung der Gitterpunkte des weiteren Gitters 13 verwendet wird.

Das gezeigte Kombinationsgitter 12 ist sehr kompakt aufgebaut und weist typischerweise eine minimale Wandstärke im Bereich der Gittermitten 18, 19 der beiden kombinierten Gitter 1, 13 von vorzugsweise 3 mm auf. Die Gittermitten 18, 19 weisen in diesem Fall beide denselben Abstand von 1,5 mm von der Gitterdrehachse z auf. Je größer die minimale Wandstärke im Bereich der Gittermitten 18, 19 ist, desto größer ist deren Abstand von der Gitterdrehachse z, und damit steigen entsprechend die geometrischen Verluste beim Verdrehen des Kombinationsgitters 12 um die Gitterdrehachse z, wenn in einem Monochromator 24 unterschiedliche Energien ausgewählt werden sollen.

Um, z.B. beim Einsatz des Kombinationsgitters 12 in einem Monochromator 24, rasch zwischen den beiden Gittern 1, 13 zu wechseln, wird das Kombinationsgitter 12 einfach um eine Schwenkachse 28 um 180° verschwenkt. Dabei kann die Schwenkachse 28 mit der Gitterdrehachse z auch zusammenfallen.

Hierbei ist es von Vorteil, wenn das Kombinationsgitter 12 Zapfen 27 aufweist, die eine entsprechende Drehlagerung des Kombinationsgitters 12 ermöglichen. Insbesondere wenn das Kombinationsgitter 12 im Spritzgussverfahren hergestellt wird, können die Zapfen 27 oder andere geeignete Befestigungsmittel des Kombinationsgitters 12 gleichzeitig miterzeugt werden. Weitere geeignete Befestigungsmittel wären Bohrungen bzw. Sacklöcher oder Passstifte.

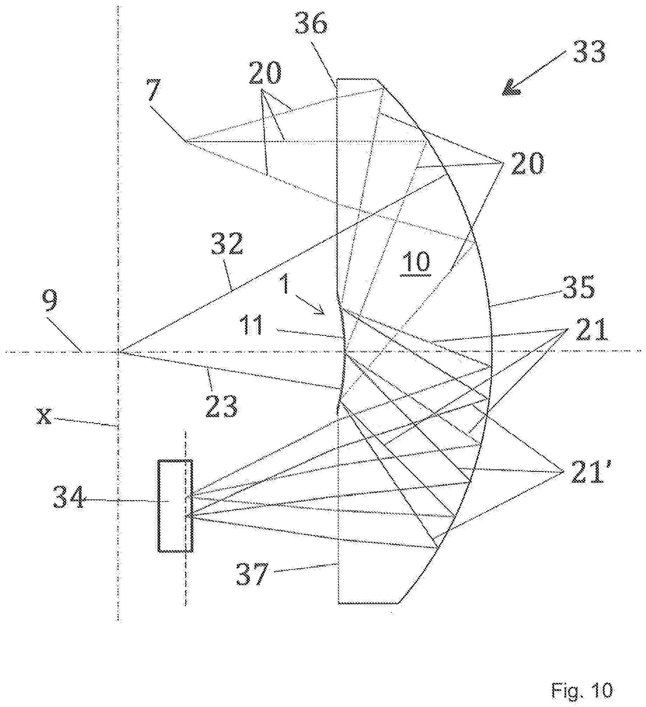

Fig. 10 zeigt den prinzipiellen Aufbau eines erfindungsgemäßen Spektrographen 33, in welchem ein erfindungsgemäßes Gitter 1 in Reflexionsgeometrie verwendet wird. Dabei ist der Basiskörper 10 für das zu zerlegende Licht transparent ausgebildet. Weiters ist der Basiskörper 10 an seiner der konkaven Außenfläche 11 gegenüberliegenden Seite ebenfalls gekrümmt ausgebildet, wobei im gezeigten Beispiel diese Seite sphärisch gekrümmt ist. Diese gekrümmte Seite ist mit einer reflektierenden Schicht 35 versehen, welche im gezeigten Beispiel eine sphärische Reflexionsfläche mit Radius 32 ausbildet. Auch die konkave Außenfläche 11 ist im gezeigten Beispiel sphärisch gekrümmt - mit Radius 23. Dabei haben die entsprechenden Kugeln der Radien 23 und 32 denselben Mittelpunkt.

Durch den Eintrittsspalt 7 gelangen einfallende Lichtstrahlen 20 zu einer Eintrittsfläche 36 des Basiskörpers 10 und breiten sich im Basiskörper 10 aus, bis sie an der reflektierenden Schicht 35 zurück in Richtung konkave Außenfläche 11 reflektiert werden. Es kommt zu einer Zerlegung des Lichts, indem ausfallende Lichtstrahlen 21, 21' unterschiedlicher Wellenlänge in unterschiedlichen Richtungen von den Gitterlinien 2 weg reflektiert werden. Die ausfallenden Lichtstrahlen 21, 21' treffen nun ihrerseits auf die reflektierende Schicht 35 und werden schließlich in Richtung einer Austrittsfläche 37 reflektiert, durch welche sie den Basiskörper 10 verlassen. Die aus dem Basiskörper 10 ausgetretenen Lichtstrahlen 21, 21' unterschiedlicher Wellenlänge werden schließlich mit einem Detektor, vorzugsweise einem Flächendetektor 34 wie z.B. einer CCD-Kamera detektiert. Es könnte aber natürlich prinzipiell auch ein Zeilendetektor verwendet werden. In jedem Fall werden die Lichtstrahlen 21, 21' in Abhängigkeit von ihrer Wellenlänge an unterschiedlichen Positionen auf dem Detektor detektiert.

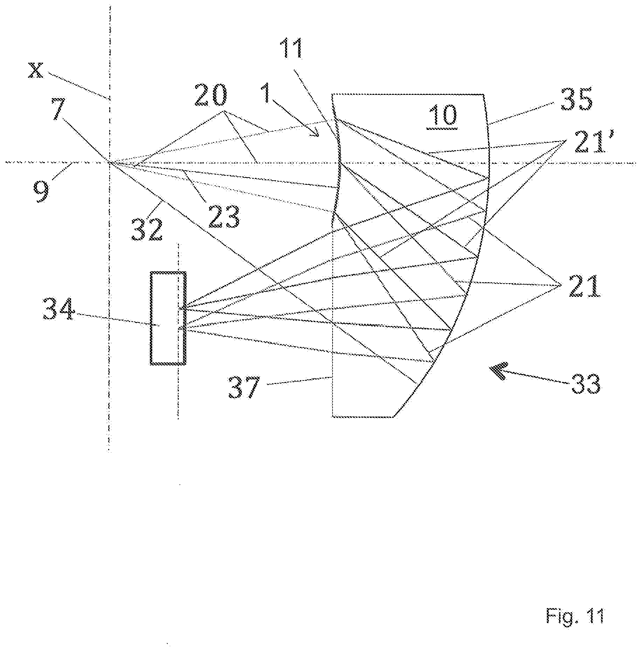

Fig. 11 zeigt eine weitere Ausführungsform eines erfindungsgemäßen Spektrographen 33, in welchem jedoch ein erfindungsgemäßes Gitter 1 in Transmissionsgeometrie verwendet wird. Wiederum ist der Basiskörper 10 für das zu zerlegende Licht transparent ausgebildet. Weiters ist der Basiskörper 10 an seiner der konkaven Außenfläche 11 gegenüberliegenden Seite ebenfalls gekrümmt ausgebildet, wobei im gezeigten Beispiel diese Seite sphärisch gekrümmt ist. Diese gekrümmte Seite ist mit einer reflektierenden Schicht 35 versehen, welche im gezeigten Beispiel eine sphärische Reflexionsfläche mit Radius 32 ausbildet. Auch die konkave Außenfläche 11 ist im gezeigten Beispiel sphärisch gekrümmt - mit Radius 23. Dabei haben die entsprechenden Kugeln der Radien 23 und 32 denselben Mittelpunkt, der in diesem Fall im Eintrittsspalt 7 angeordnet ist.

Durch den Eintrittsspalt 7 gelangen einfallende Lichtstrahlen 20 auf das Gitter 1 bzw. auf dessen aktive Fläche. Das Licht tritt durch die aktive Fläche hindurch in den Basiskörper 10 ein und wird dabei aufgrund der Gitterlinien 2 abgelenkt.

Dabei kommt es zu einer Zerlegung des Lichts, indem ausfallende Lichtstrahlen 21, 21' unterschiedlicher Wellenlänge in unterschiedlichen Richtungen abgelenkt werden. Die ausfallenden Lichtstrahlen 21, 21' breiten sich im Basiskörper 10 aus und treffen in der Folge auf die reflektierende Schicht 35. Von dieser werden die Lichtstrahlen 21, 21' schließlich in Richtung einer Austrittsfläche 37 reflektiert, durch welche sie den Basiskörper 10 verlassen. Die aus dem Basiskörper 10 ausgetretenen Lichtstrahlen 21, 21' unterschiedlicher Wellenlänge werden schließlich wieder mit einem Detektor, vorzugsweise einem Flächendetektor 34 wie z.B. einer CCD-Kamera detektiert. Es könnte aber natürlich prinzipiell auch ein Zeilendetektor verwendet werden. In jedem Fall werden die Lichtstrahlen 21, 21' in Abhängigkeit von ihrer Wellenlänge an unterschiedlichen Positionen auf dem Detektor detektiert.

BEZUGSZEICHENLISTE

| | |
|---|---|
| 1 | Gitter |
| 2 | Gitterlinie |
| 3 | Drehkörper |
| 4 | Kontur |
| 5 | Facette |
| 6 | Gitterpunkt |
| 7 | Eintrittsspalt |
| 8 | Austrittsspalt |
| 9 | Gitternormale |
| 10 | Basiskörper des Gitters |
| 11 | Konkave Außenfläche |
| 12 | Kombinationsgitter |
| 13 | Weiteres Gitter |
| 14 | Weiterer Drehkörper |
| 15 | Weitere konkave Außenfläche |
| 16 | Abstand zwischen erster Punktquelle und Ursprung des Gitters |
| 17 | Abstand zwischen zweiter Punktquelle und Ursprung des Gitters |
| 18 | Mittelpunkt des Gitters |
| 19 | Mittelpunkt des weiteren Gitters |
| 20 | Einfallender Lichtstrahl |
| 21 | Ausfallender Lichtstrahl |
| 21' | Ausfallender Lichtstrahl einer zweiten Wellenlänge |
| 22 | Ablenkungswinkel |
| 23 | Kugelradius |
| 24 | Monochromator |
| 25 | Rahmen |
| 26 | Facettennormale |
| 27 | Zapfen |
| 28 | Schwenkachse |
| 29 | Tangente |
| 30 | Hyperbel |
| 31 | Asymptote |
| 32 | Radius einer sphärischen Reflexionsfläche |
| 33 | Spektrograph |
| 34 | Flächendetektor |
| 35 | Reflektierende Schicht, die die sphärische Reflexionsfläche ausbildet |
| 36 | Eintrittsfläche |
| 37 | Austrittsfläche |
| $\alpha$ | Einfallswinkel |
| $\beta$ | Ausfallswinkel |
| Q1 | Erste Punktquelle |
| Q2 | Zweite Punktquelle |
| F1 | Erster Brennpunkt einer Hyperbel |
| F2 | Zweiter Brennpunkt der Hyperbel |
| P | Punkt auf der Hyperbel |
| Q | weiterer Punkt auf der Hyperbel |
| S1 | Abstand zwischen P und F1 |
| S2 | Abstand zwischen P und F2 |
| t1 | Abstand zwischen Q und F1 |
| t2 | Abstand zwischen Q und F2 |
| x | Drehachse |
| y | Normalachse |
| z | Gitterdrehachse |
| U | Ursprungspunkt |
| d | Gitterkonstante |

**Patentansprüche**

1. Verfahren zur Herstellung eines konkaven oder konvexen Gitters (1) für einen Monochromator, das Verfahren umfassend die Berechnung von Koordinaten von Gitterpunkten (6) von Gitterlinien (2) auf einem Drehkörper (3), indem Schnittpunkte einer Schar von Hilfsflächen mit einer Oberfläche des Drehkörpers (3) bestimmt werden, wobei die Schar von Hilfsflächen durch eine Schar von Kurven zweiter Ordnung, die um eine Drehachse (x) des Drehkörpers (3) rotieren, erzeugt werden, das Verfahren weiters umfassend das Einspeisen der Koordinaten der Schnittpunkte bzw. Gitterpunkte (6) in eine computergesteuerte Ultrapräzisionsdrehmaschine, um eine Gitterstruktur, die um die Drehachse (x) zentrierten Kreisen oder einer um die Drehachse (x) verlaufenden Spirale entspricht, in einen Basiskörper zu drehen, der zumindest abschnittsweise die Form des Drehkörpers (3) aufweist.

2. Verfahren nach Anspruch 1, **dadurch gekennzeichnet, dass** zur Berechnung der Schar von Hilfsflächen eine erste Punktquelle (Q1) einer Kugelwelle mit einer beliebig vorgebbaren Wellenlänge $\lambda_0$ an-

genommen wird, wobei die Hilfsflächen Flächen der Kugelwelle entsprechen, die konstante Phase haben und zueinander eine Phasenverschiebung aufweisen, die ein ganzzahliges Vielfaches von $2*\pi$ ist, und wobei die erste Punktquelle (Q1) auf der Drehachse (x) des Drehkörpers (3) positioniert ist und diese Position der ersten Punktquelle (Q1) der Position eines Eintrittsspalts (7) oder eines Austrittsspalts (8) des Monochromators entspricht.

3. Verfahren nach Anspruch 1, **dadurch gekennzeichnet, dass** zur Berechnung der Schar von Hilfsflächen eine erste Punktquelle (Q1) und eine zweite Punktquelle (Q2) von Kugelwellen mit einer beliebig vorgebbaren Wellenlänge $\lambda_0$ angenommen werden, wobei die erste Punktquelle (Q1) und die zweite Punktquelle (Q2) auf einer Drehachse (x) des Drehkörpers (3) angeordnet sind und wobei die Hilfsflächen Flächen einer bestimmten, vorzugsweise maximalen Intensität der Interferenz der beiden Kugelwellen entsprechen.

4. Verfahren nach Anspruch 3, **dadurch gekennzeichnet, dass** zur Bestimmung der Schnittpunkte um die Drehachse (x) rotierende Hyperbeln (30) mit der Oberfläche des Drehkörpers (3) geschnitten werden, wobei in den beiden Brennpunkten (F1, F2) der jeweiligen Hyperbel (30) die beiden Punktquellen (Q1, Q2) angenommen sind und nur solche Hyperbeln (30) betrachtet werden, für die gilt, dass bei der jeweiligen Hyperbel (30) die absolute Differenz der Abstände (S1, S2) von jedem auf der Hyperbel (30) liegenden Punkt (P) zu den Brennpunkten (F1, F2) gleich $N * \lambda_0$ ist, wobei N eine, für die jeweilige Hyperbel (30) gewählte, ganze Zahl ist.

5. Verfahren nach einem der Ansprüche 3 bis 4, **dadurch gekennzeichnet, dass** die Schnittpunkte lediglich in einer Konstruktionsebene, die von der Drehachse (x) und einer Normalachse (y) aufgespannt wird, bestimmt werden, wobei die Normalachse (y) normal auf die Drehachse (x) steht und durch einen, auf der Drehachse (x) liegenden Ursprungspunkt (U), der ein Schnittpunkt der Oberfläche des Drehkörpers (3) mit der Drehachse (x) ist, verläuft.

6. Verfahren nach einem der Ansprüche 3 bis 5, **dadurch gekennzeichnet, dass** ein auf der Drehachse (x) gemessener Abstand (16) zwischen einem Ursprungspunkt (U), der ein Schnittpunkt der Oberfläche des Drehkörpers (3) mit der Drehachse (x) ist, und der ersten Punktquelle (Q1) zu einem auf der Drehachse (x) gemessenen Abstand (17) zwischen dem Ursprungspunkt (U) und der zweiten Punktquelle (Q2) in einem Verhältnis von 1:0,34 bis 1:0,95 steht.

7. Verfahren nach Anspruch 6, **dadurch gekennzeichnet, dass** der Abstand (16) zwischen dem Ursprungspunkt (U) und der ersten Punktquelle (Q1) zwischen 95 mm und 145 mm beträgt und dass der Abstand (17) zwischen dem Ursprungspunkt (U) und der zweiten Punktquelle (Q2) zwischen 50 mm und 90 mm beträgt.

8. Verfahren nach einem der Ansprüche 1 bis 7, **dadurch gekennzeichnet, dass** in einer Konstruktionsebene, die durch die Drehachse (x) und eine Normalachse (y) aufgespannt wird, wobei die Normalachse (y) normal auf die Drehachse (x) steht und durch einen Ursprungspunkt (U) verläuft, der ein Schnittpunkt der Oberfläche des Drehkörpers (3) mit der Drehachse (x) ist, eine Kontur (4) des Gitters (1) festgelegt wird, indem zwischen den Gitterpunkten (6) abschnittsweise gerade Linien angeordnet werden, die an jeweils einen Gitterpunkt (6) direkt anschließen und Facetten (5) des Gitters (1) definieren, wobei die geraden Linien jeweils mit einer in der Konstruktionsebene liegenden Tangente (29) an das Gitter (1) im betrachteten Gitterpunkt (6) einen Winkel $\theta_B$ einschließen, der jeweils derart gewählt ist, dass die Blaze-Bedingung für mindestens eine vorgebbare Blaze-Wellenlänge $\lambda_B$ erfüllt ist.

9. Verfahren nach Anspruch 8, **dadurch gekennzeichnet, dass** zur Bestimmung des jeweiligen Winkels $\theta_B$ auch ein Eintrittsspalt (7) sowie ein Austrittsspalt (8) des Monochromators auf der Drehachse (x) angeordnet werden; dass zu jedem Gitterpunkt (6) das Gitter (1) soweit um eine durch einen Gittermittelpunkt (18) verlaufende Gitterdrehachse (z) um einen Verdrehwinkel $\Delta$ gedreht wird, bis für Lichtstrahlen (20, 21), die vom gedrehten Gitter (1) zum Austrittsspalt (8) abgelenkt werden, die vorgebbare Blaze-Wellenlänge $\lambda_B$ erzielt wird; dass eine Winkelhalbierende zwischen Lichtstrahlen, die vom Eintrittsspalt (7) auf das Gitter (1) fallen, und den vom Gitter (1) zum Austrittsspalt (8) abgelenkten Lichtstrahlen bestimmt wird, die normal auf die gerade Linie der Kontur (4) steht, woraus unmittelbar $\theta_B$ folgt.

10. Verfahren nach Anspruch 9, **dadurch gekennzeichnet, dass** für jeden Gitterpunkt (6) der jeweilige Winkel $\theta_B$ korrigiert um den Verdrehwinkel $\Delta$ in die Ultrapräzisionsdrehmaschine eingespeist wird, um Bearbeitungswinkel für ein Werkzeug der Ultrapräzisionsdrehmaschine zur Verfügung zu stellen, die ein Drehen der Gitterstruktur mit der Kontur (4) ermöglichen.

11. Verfahren nach einem der Ansprüche 8 bis 10, **dadurch gekennzeichnet, dass** zur Festlegung der Kontur (4) des Gitters (1) zwischen zwei Gitterpunkten (6) jeweils mindestens eine weitere gerade Linie anschließend an die jeweilige gerade Linie angeordnet wird, wobei die mindestens eine weitere gerade Linie mit der Tangente (29) einen Winkel $\theta_{B'}$ einschließt, der jeweils derart gewählt ist, dass die Blaze-Bedingung für eine vorgebbare Blaze-Wellenlänge $\lambda_{B'}$ erfüllt ist, wobei $\theta_{B'} \neq \theta_B$ und $\lambda_{B'} \neq \lambda_B$ gilt.

12. Verfahren nach einem der Ansprüche 8 bis 10, **dadurch gekennzeichnet, dass** für verschiedene Facetten (5) die Blaze-Bedingung für unterschiedliche vorgebbare Blaze-Wellenlängen $\lambda_B$ erfüllt ist.

13. Verfahren nach Anspruch 12, **dadurch gekennzeichnet, dass** für aufeinander folgende Facetten (5) die Blaze-Bedingung abwechselnd für zwei unterschiedliche vorgebbare Blaze-Wellenlängen $\lambda_B$, $\lambda_{B'}$ erfüllt ist.

14. Verfahren nach einem der Ansprüche 1 bis 13, **dadurch gekennzeichnet, dass** mittels der Ultrapräzisionsdrehmaschine die Gitterlinien (2) unter Verwendung der eingespeisten Koordinaten direkt in einen Basiskörper (10) des Gitters, der zumindest abschnittsweise die Form des Drehkörpers aufweist, (3) gedreht werden, um das Gitter (1) zu erzeugen, wobei hierbei eine Außenfläche (11) des Basiskörpers (10) bearbeitet wird, die dieselbe Krümmung wie das herzustellende Gitter (1) aufweist.

15. Verfahren nach einem der Ansprüche 1 bis 13, **dadurch gekennzeichnet, dass** mittels der Ultrapräzisionsdrehmaschine Negative der Gitterlinien (2) unter Verwendung der eingespeisten Koordinaten direkt in einen Basiskörper einer Gussform gedreht werden, wobei der Basiskörper der Gussform zumindest abschnittsweise die Form des Drehkörpers (3) aufweist und wobei hierbei eine Außenfläche des Basiskörpers der Gussform bearbeitet wird, die eine entgegengesetzte Krümmung wie das herzustellende Gitter (1) aufweist.

**Claims**

1. Method for producing a concave or convex grating (1) for a monochromator,
   the method comprising the calculation of coordinates of grating points (6) of grating lines (2) on a rotary body (3) by determining points of intersections of a family of auxiliary surfaces with a surface of the rotary body (3), wherein the family of auxiliary surfaces is generated by a family of second-order curves rotating about an axis of rotation (x) of the rotary body (3), the method further comprising feeding the coordinates of the points of intersection or grating points (6) into a computer-controlled ultra-precision turning machine to turn a grating structure corresponding to circles centered about the axis of rotation (x) or to a spiral extending about the axis of rotation (x) into a base body having at least in sections the shape of the rotary body (3).

2. Method according to claim 1, **characterized in that,** in order to calculate the family of auxiliary surfaces, a first point source (Q1) of a spherical wave having a wavelength $\lambda_0$ which can be predetermined at random is assumed, wherein the auxiliary surfaces correspond to surfaces of the spherical wave which have a constant phase and comprise a phase shift with respect to one another, which is an integer multiple of $2*\pi$, and wherein the first point source (Q1) is positioned on the axis of rotation (x) of the rotary body (3) and this position of the first point source (Q1) corresponds to the position of an entrance slit (7) or an exit slit (8) of the monochromator.

3. Method according to claim 1, **characterized in that** a first point source (Q1) and a second point source (Q2) of spherical waves having a wavelength $\lambda_0$ which can be predetermined at random are assumed for calculating the family of auxiliary surfaces, wherein the first point source (Q1) and the second point source (Q2) are arranged on an axis of rotation (x) of the rotary body (3), and wherein the auxiliary surfaces correspond to surfaces of a specific, preferably maximum intensity of the interference of the two spherical waves.

4. Method according to claim 3, **characterized in that** hyperbolas (30) rotating about the axis of rotation (x) are intersected with the surface of the rotary body (3) in order to determine the points of intersection, wherein the two point sources (Q1, Q2) are assumed in the two focal points (F1, F2) of the respective hyperbolas (30) and only such hyperbolas (30) are considered for which it applies that, in the respective hyperbola (30), the absolute difference of the distances (S1, S2) from each point (P) located on the hyperbola (30) to the focal points (F1, F2) is equal to $N * \lambda_0$, wherein N is an integer selected for the respective hyperbola (30).

5. Method according to one of claims 3 to 4, **characterized in that** the points of intersection are determined only in a construction plane defined by the axis of rotation (x) and a normal axis (y), wherein the normal axis (y) is normal to the axis of rotation (x) and extends through a point of origin (U), which point of origin (U) is situated on the axis of rotation (x) and is an intersection of the surface of the rotary body (3) with the axis of rotation (x).

6. Method according to one of claims 3 to 5, **characterized in that** a distance (16) measured on the axis of rotation (x) between a point of origin (U), which is a point of intersection of the surface of the rotary body (3) with the axis of rotation (x), and the first point source (Q1) to a distance (17) measured on the axis of rotation (x) between the point of origin (U) and the second point source (Q2) is in a ratio of 1:0.34 to 1:0.95.

7. Method according to claim 6, **characterized in that** the distance (16) between the point of origin (U) and the first point source (Q1) is between 95 mm and 145 mm and that the distance (17) between the point of origin (U) and the second point source (Q2) is between 50 mm and 90 mm.

8. Method according to one of claims 1 to 7, **characterized in that** a contour (4) of the grating (1) is defined in a construction plane defined by the axis of rotation (x) and a normal axis (y), wherein the normal axis (y) is normal to the axis of rotation (x) and extends through a point of origin (U) which is a point of intersection of the surface of the rotary body (3) with the axis of rotation (x), by straight lines being arranged in sections between the grating points (6), which straight lines directly adjoin in each case one grating point (6) and define facets (5) of the grating (1), wherein the straight lines each enclose an angle $\theta_B$ with a tangent (29) lying in the construction plane to the grating (1) in the grating point (6) considered, which angle $\theta_B$ is selected in each case in such a way that the blaze condition for at least one predeterminable blaze wavelength $\lambda_B$ is fulfilled.

9. Method according to claim 8, **characterized in that** for determining the respective angle $\theta_B$, an entrance slit (7) and an exit slit (8) of the monochromator are also arranged on the axis of rotation (x); **in that**, at each grating point (6), the grating (1) is rotated about a grating axis of rotation (z) extending through a grating center (18) by an angle of rotation $\Delta$ until the predeterminable blaze wavelength $\lambda_B$ is achieved for light beams (20, 21) which are deflected from the rotated grating (1) to the exit slit (8); **in that** an angle bisector is determined between light beams which fall from the entrance slit (7) onto the grating (1) and the light beams which are deflected from the grating (1) to the exit slit (8) and which stand normally on the straight line of the contour (4), from which $\theta_B$ follows directly.

10. Method according to claim 9, **characterized in that,** for each grating point (6), the respective angle $\theta_B$ is fed into the ultra-precision turning machine corrected by the angle of rotation $\Delta$ in order to provide machining angles for a tool of the ultra-precision turning machine which allow a turning of the grating structure with the contour (4).

11. Method according to one of claims 8 to 10, **characterized in that,** in order to define the contour (4) of the grating (1) between two grating points (6), in each case at least one further straight line is arranged adjacent to the respective straight line, wherein the at least one further straight line encloses an angle $\theta_{B'}$ with the tangent (29), which is in each case selected in such a way that the blaze condition is fulfilled for a predeterminable blaze wavelength $\lambda_{B'}$, wherein $\theta_{B'} \neq \theta_B$ and $\lambda_{B'} \neq \lambda_B$ applies.

12. Method according to one of claims 8 to 10, **characterized in that** for different facets (5) the blaze condition is fulfilled for different predeterminable blaze wavelengths $\lambda_B$.

13. Method according to claim 12, **characterized in that** for successive facets (5) the blaze condition is fulfilled alternately for two different predeterminable blaze wavelengths $\lambda_B$, $\lambda_{B'}$.

14. Method according to one of claims 1 to 13, **characterized in that,** by means of the ultra-precision turning machine and by using the fed coordinates, the grating lines (2) are turned directly into a base body (10) of the grating (1), which at least partially has the shape of the rotary body (3), in order to produce the grating (1), wherein in this case an outer surface (11) of the base body (10), which has the same curvature as the grating (1) to be produced, is machined.

15. Method according to one of claims 1 to 13, **characterized in that,** by means of the ultra-precision turning machine, negatives of the grating lines (2) are turned directly into a base body of a casting mold using the fed coordinates, wherein the base body of the casting mold has at least in sections the shape of the rotary body (3) and wherein in this case an outer surface of the base body of the casting mold, which has an opposite curvature to that of the grating (1) to be produced, is machined.

## Revendications

1. Procédé pour la fabrication d'une grille (1) concave ou convexe pour un monochromateur, lequel procédé inclut le calcul de coordonnées de points de grille (6) de lignes de grille (2) sur un corps en rotation (3) en déterminant des points d'intersection d'une famille de surfaces subsidiaires avec une surface du corps en rotation (3), la famille de surfaces subsidiaires étant générée par une famille de courbes de deuxième ordre en rotation autour d'un axe de rotation (x) du corps en rotation (3),
le procédé comprenant en outre la fourniture des coordonnées des points d'intersection ou points de grille (6) à un tour d'ultraprécision piloté par ordinateur pour tourner une structure de grille correspondant à des cercles centrés sur l'axe de rotation (x) ou à une spirale tournant autour de l'axe de rotation (x) dans un corps de base présentant au moins en partie la forme du corps en rotation (3).

2. Procédé selon la revendication 1, **caractérisé en ce que** pour calculer la famille de surfaces subsidiaires, une première source ponctuelle (Q1) d'une onde sphérique ayant une longueur d'onde quelconque $\lambda_0$ prédéfinissable est supposée, les surfaces subsidiaires étant des surfaces de l'onde sphérique qui ont une phase constante et présentent les unes par rapport aux autres un décalage de phase qui est un multiple entier de $2 * \pi$, et dans lequel la première source ponctuelle (Q1) est positionnée sur l'axe de rotation (x) du corps en rotation (3) et cette position de la première source ponctuelle (Q1) correspond à la position d'une fente d'entrée (7) ou d'une fente de sortie (8) du monochromateur.

3. Procédé selon la revendication 1, **caractérisé en ce que** pour le calcul de la famille de surfaces subsidiaires, une première source ponctuelle (Q1) et une deuxième source ponctuelle (Q2) d'ondes sphériques ayant une longueur d'onde quelconque $\lambda_0$ prédéfinissable sont supposées, la première source ponctuelle (Q1) et la deuxième source ponctuelle (Q2) étant disposées sur un axe de rotation (x) du corps en rotation (3) et les surfaces subsidiaires correspondant à des surfaces d'une certaine intensité, de préférence maximale, de l'interférence des deux ondes sphériques.

4. Procédé selon la revendication 3, **caractérisé en ce que** pour déterminer les points d'intersection, des hyperboles (30) en rotation autour de l'axe de rotation (x) sont coupées par la surface du corps en rotation (3), les deux sources de points (Q1, Q2) étant posées dans les deux foyers (F1, F2) des hyperboles (30), et seules sont prises en compte les hyperboles (30) pour lesquelles, dans l'hyperbole (30) en question, la différence absolue des distances (S1, S2) de chaque point (P) de l'hyperbole (30) aux foyers (F1, F2) est égale à $N * \lambda_0$, où N est un nombre entier choisi pour l'hyperbole (30) en question.

5. Procédé selon l'une des revendications 3 à 4, **caractérisé en ce que** les points d'intersection sont déterminés seulement dans un plan de construction qui est défini par l'axe de rotation (x) et un axe normal (y), lequel axe normal (y) est perpendiculaire à l'axe de rotation (x) et passe par un point d'origine (U) situé sur l'axe de rotation (x) qui correspond à un point d'intersection de la surface du corps en rotation (3) avec l'axe de rotation (x).

6. Procédé selon l'une des revendications 3 à 5, **caractérisé en ce qu'**une distance (16) mesurée sur l'axe de rotation (x) entre un point d'origine (U) qui est un point d'intersection de la surface du corps en rotation (3) avec l'axe de rotation (x) et la première source ponctuelle (Q1) est dans un rapport de 1:0,34 à 1:0,95 par rapport à une distance (17) mesurée sur l'axe de rotation (x) entre le point d'origine (U) et la deuxième source ponctuelle (Q2).

7. Procédé selon la revendication 6, **caractérisé en ce que** la distance (16) entre le point d'origine (U) et la première source ponctuelle (Q1) est comprise entre 95 mm et 145 mm et **en ce que** la distance (17) entre le point d'origine (U) et la deuxième source ponctuelle (Q2) est comprise entre 50 mm et 90 mm.

8. Procédé selon l'une des revendications 1 à 7, **caractérisé en ce qu'**un contour (4) de la grille (1) est fixé dans un plan de construction défini par l'axe de rotation (x) et un axe normal (y), lequel axe normal (y) est perpendiculaire à l'axe de rotation (x) et passe par un point d'origine (U) qui est un point d'intersection de la surface du corps en rotation (3) avec l'axe de rotation (x), en disposant entre les points de grille (6) des lignes droites par section qui se raccordent chacune directement à un point de grille (6) et définissent des facettes (5) de la grille (1), les lignes droites formant chacune au point de grille (6) considéré avec une tangente (29) à la grille (1) située dans le plan de construction un angle $\theta_B$ qui est choisi de telle façon que la condition de Blaze pour une longueur d'onde de Blaze $\lambda_B$ prédéfinissable soit remplie.

9. Procédé selon la revendication 8, **caractérisé en ce qu'**afin de déterminer chaque angle $\theta_B$, une fente d'entrée (7) et une fente de sortie (8) du monochromateur sont aussi disposées sur l'axe de rotation (x) ;

**en ce qu'**en chaque point de grille (6), la grille (1) est tournée d'un angle de rotation $\Delta$ autour d'un axe de rotation de grille (z) passant par un centre de grille (18) jusqu'à ce que la longueur d'onde de Blaze $\lambda_B$ prédéfinissable soit atteinte pour les rayons lumineux (20, 21) qui sont déviés vers la fente de sortie (8) par la grille (1) tournée ;

**en ce qu'**une bissectrice entre les rayons lumineux atteignant la grille (1) à travers la fente d'entrée (7) et les rayons lumineux déviés par la grille (1) vers la fente de sortie (8) est définie perpendiculairement à la ligne droite du contour (4) de laquelle découle directement $\theta_B$.

10. Procédé selon la revendication 9, **caractérisé en ce que** pour chaque point de grille (6), l'angle $\theta_B$ correspondant est fourni au tour d'ultraprécision après correction avec l'angle de rotation $\Delta$ afin de réaliser des angles d'usinage d'outil du tour d'ultraprécision qui permettent le tournage de la structure de grille avec le contour (4).

**11.** Procédé selon l'une des revendications 8 à 10, **caractérisé en ce qu'**afin de déterminer le contour (4) de la grille (1) entre deux points de grille (6), au moins une autre ligne droite est disposée à la suite de chaque ligne droite, l'au moins une autre ligne droite formant avec la tangente (29) un angle $\theta_{B'}$ qui est choisi à chaque fois de telle façon que la condition de Blaze soit remplie pour une longueur d'onde de Blaze $\lambda_{B'}$ prédéfinissable, avec $\theta_{B'} \pm \theta_B$ et $\lambda_{B'} \neq \lambda_B$.

**12.** Procédé selon l'une des revendications 8 à 10, **caractérisé en ce que** pour différentes facettes (5), la condition de Blaze est remplie pour différentes longueurs d'onde de Blaze $\lambda_B$ prédéfinissables.

**13.** Procédé selon la revendication 12, **caractérisé en ce que** la condition de Blaze est remplie alternativement, pour des facettes (5) successives, pour deux longueurs d'onde de Blaze $\lambda_B$, $\lambda_{B'}$ différentes.

**14.** Procédé selon l'une des revendications 1 à 13, **caractérisé en ce que** les lignes de grille (2) sont tournées directement dans le corps de base (10), qui présente au moins par zones la forme du corps en rotation (3), au moyen du tour d'ultraprécision en utilisant les coordonnées fournies afin de créer la grille (1), une surface extérieure (11) du corps de base (10) qui présente la même courbure que la grille (1) à réaliser étant ainsi usinée.

**15.** Procédé selon l'une des revendications 1 à 13, **caractérisé en ce que** des négatifs des lignes de grille (2) sont tournés directement dans un corps de base d'un moule de coulée au moyen du tour d'ultraprécision en utilisant les coordonnées fournies, le corps de base du moule de coulée présentant au moins par zones la forme du corps en rotation (3) et une surface extérieure du corps de base du moule de coulée qui présente une courbure inverse de la grille (1) à réaliser étant ainsi usinée.

Fig. 1

Fig. 2

Fig. 3

Fig. 4

Fig. 5

Fig. 6

Fig. 7

Fig. 8

Fig. 9

Fig. 10

Fig. 11

## IN DER BESCHREIBUNG AUFGEFÜHRTE DOKUMENTE

### In der Beschreibung aufgeführte Patentdokumente

- JP 2004053992 A
- US 2006050392 A1
- US 2007252989 A1

### In der Beschreibung aufgeführte Nicht-Patentliteratur

- **C. PALMER ; E. LOEWEN.** Diffraction Grating Handbook. 2005